# EUROPÄISCHE PATENTSCHRIFT

(11) **EP 2 062 952 B1**
(45) Veröffentlichungstag und Bekanntmachung des Hinweises auf die Patenterteilung: **06.01.2016**
(21) Anmeldenummer: 08167560.5
(22) Anmeldetag: 24.10.2008
(51) Int. Cl.: C09J 7/02

(54) **Haftklebebänder für den Rollenwechsel von Flachbahnmaterialien**
Adhesive tapes for exchange rolls of flat trajectory materials
Bandes adhésives pour le changement de rouleau de matériaux à bande plate

(30) Priorität: 07.11.2007 DE 102007053432
(43) Veröffentlichungstag der Anmeldung: 27.05.2009
(73) Patentinhaber: tesa SE, 22848 Norderstedt (DE)
(72) Erfinder: Ellringmann, Kai, Dr., 22523, Hamburg (DE); Utesch, Nils, Dr., 20357, Hamburg (DE); Wulf, Stefan, Dr., 40166, Mönchengladbach (DE); Zöllner, Stephan, Dr., 21244, Buchholz /Nordheide (DE); Nagel, Christoph, 22417, Hamburg (DE)

(56) Entgegenhaltungen:
- EP-A- 1 640 301
- WO-A-03/008311
- WO-A-2007/057304

## Beschreibung

Die Erfindung betrifft ein Klebeband für den Rollenwechsel von auf Rollen aufgewickeltem unpolaren Flachbahnmaterial, insbesondere den fliegenden Rollenwechsel, gemäß den Merkmalen des Oberbegriffs des Hauptanspruchs sowie ein Verfahren zur Herstellung der Klebebänder.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Haftklebebänder zum Einsatz, um das Ende der alten Bahn mit dem Anfang der neuen Bahn zu verbinden.

Die Durchführung eines fliegenden Rollenwechsels (auch "dynamischer Rollenwechsel" genannt) erfolgt in der Industrie insbesondere nach folgendem Verfahren.

Doppelseitig klebende Selbstklebebänder werden in Handarbeit am Bahnanfang der Bahn der neuen Rolle in einer vorteilhaften Anordnung verklebt (üblicherweise w- oder v-förmig) und das an dem Klebeband überstehende Bahnmaterial abgetrennt. Zusätzlich wird der Anfang der Bahn der neuen Rolle mit sogenannten Festhalteetiketten (oder "Fixen") an der darunter liegenden Wicklung der neuen Rolle fixiert, um zu verhindern, dass die Bahn abgewickelt wird, wenn die neue Rolle auf die Oberflächengeschwindigkeit der alten Rolle beschleunigt. Nachteilig an diesem Verfahren ist, dass die Vorbereitung der Rollen sehr zeitaufwändig ist und das Verkleben den Einsatz von Fachkräften erfordert. Zudem führt das Verfahren nicht immer zu den gewünschten Ergebnissen, da die so erzielten Verklebungen durch die Schichtung von Bahnmaterial, Festhalteetiketten und Klebestreifen relativ dick sind. Ferner kann es gerade bei dünnen, flexiblen Bahnmaterialien dazu kommen, dass am Anfang einer neuen Bahn infolge des bei der Rotation auftretenden gegengerichteten Luftstroms Ausstülpungen im Bahnmaterial auftreten, was im allgemeinen zu einer schlechten Verklebung der Bahnen führen kann.

Vorstehendes Verfahren kommt auch in der papierverarbeitenden Industrie zum Einsatz. Dort stellt eine Weiterentwicklung das sogenannte Splice-Verfahren (Splicing-Verfahren; Spleißverfahren) dar, bei dem das zur Fixierung dienende Fix in das die Papierbahnen verbindende Selbstklebeband integriert ausgebildet ist. Nach Verbinden der Bahnen spaltet hierbei der als Fix dienende spaltfähige Träger auf, so dass ein Teil des spaltfähigen Trägers auf dem die Bahnen verbindenden Selbstklebeband verbleibt (d. h. an der oberen Wicklung), während der andere Teil an der darunter liegenden Wicklung verbleibt. Als "spaltfähig" werden solche Träger bezeichnet, die parallel zu ihrer Flächenausdehnung spaltbar sind, und insbesondere solche Träger, die bezogen auf die Anforderungen in einem Splice-Verfahren auch tatsächlich spalten.

Klebebänder, wie sie nach dem Stand der Technik für fliegende Rollenwechsel bekannt sind, weisen einige Nachteile auf, wenn man andere Flachbahnmaterialien als Papiere einem fliegenden Rollenwechsel unterziehen will.

So weisen die bekannten Klebebänder für den fliegenden Rollenwechsel keine oder keine hinreichende Haftung auf Silikonflächen, also auch nicht auf Flachbahnmaterialien aus Silikon oder auf Flachbahnmaterialien mit silikonisierten Oberflächen auf. Dies liegt unter anderem an der sehr niedrigen Oberflächenenergie von Silikon, die in einem Bereich von ≤ 24 mN/m liegt.

Ein weiterer Nachteil der Klebebänder, die der Stand der Technik für den Anwendungsbereich der fliegenden Rollenwechsel vorschlägt, ist, dass diese Klebebänder üblicherweise nur Wärmescherfestigkeiten bis in Temperaturbereiche von unter 100 °C, oftmals nur bis etwa 95 °C, aufweisen.

Klebebänder, die für den fliegenden Rollenwechsel von Flachbahnmaterialien mit Silikonoberflächen oder silikonisierten Oberflächen geeignet sein sollen, müssen aber ein hochgesetztes Anspruchsprofil erfüllen. Sie müssen eine hervorragende Klebrigkeit auf eben diesen Materialien aufweisen. Weiterhin ist es erforderlich, eine gute Anfassklebrigkeit ("Tack") zu besitzen, um auch bei sehr kurzen Kontaktzeiten zuverlässig anzuhaften, aber dabei gleichzeitig eine hinreichende Kohäsion zu besitzen, um den Bedingungen des fliegenden Rollenwechsels zu genügen.

Zudem ist es sehr wünschenswert, dass die für die Klebebänder eingesetzten Klebemassen eine sehr gute Wärmescherfestigkeit aufweisen.

Klebebänder, die Klebemassen auf Silikonbasis aufweisen, erschienen dem Fachmann für die Anwendung der Verklebungen im fliegenden Rollenwechsel daher als nicht geeignet. Zwar ist eine Reihe von Silikonklebemassen bekannt, die hochtackige Eigenschaften besitzen. Diese Klebemassen sind aber durchweg sehr weich und fließfähig eingestellt und besitzen daher nicht genügend Kohäsion und Wärmescherfestigkeit. Zur Erhöhung der Kohäsion ist es daher möglich, diese Si-Klebemassen zu vernetzen. Das erfolgt nach dem Stand der Technik durch eine radikalisch-chemische Vernetzung mittels Benzoylperoxid (BPO). Durch dieses Vernetzungsverfahren erfahren die resultierenden Klebemassen jedoch einen signifikanten Verlust bezüglich des Tacks und des Adhäsionsvermögens. Dem Fachmann war daher geläufig, dass vernetzte, hinreichend kohäsive Klebemassen auf Silikonbasis leider keine hinreichenden Tackwerte aufweisen, um für Klebebänder für den fliegenden Rollenwechsel eingesetzt werden zu können.

Aufgabe der Erfindung ist es, geeignete Klebebänder für den - insbesondere fliegenden - Rollenwechsel von Flachbahnmaterialien mit silikonisierten Oberflächen oder mit Silikonoberflächen anzubieten.

Derartige Klebebänder sollten Haftklebemassen aufweisen, die hervorragend auf Silikon kleben, einen hohen Tack (Anfassklebrigkeit) aufweisen, insbesondere derart, dass sie bei sehr kurzen Kontaktzeiten - in der Praxis häufiger ≤ 1 ms - sehr gut anfassen, dass sie weiterhin eine gute Kohäsion besitzen und vorteilhafter Weise auch noch gute Wärmescherfestigkeiten haben.

Für die Verwendung als Klebemassen für Klebebänder für den - insbesondere fliegenden - Rollenwechsel sollten die Klebemassen zudem derart beschaffen sein, dass sie die leichte Spaltbarkeit der spaltbaren Träger derartiger Klebebänder nicht negativ beeinflussen; insbesondere sollten die Klebemassen nicht in das Spaltträger-Material - zum Beispiel Papier- migrieren und dort zu Verblockung führen.

Die Aufgabe konnte überraschend gelöst werden durch Haftklebebänder umfassend zumindest einen spaltbaren Träger und zwei Klebemassen-Schichten, wobei mindestens eine der Klebemassen eine Silikonklebemasse ist. Insbesondere vorteilhaft eignet sich ein solches Klebeband zur Lösung der Aufgabe, wenn die Silikonklebemasse durch aktinische Strahlung, insbesondere durch Elektronenstrahlung vernetzt ist.

Im Rahmen der vorliegenden Schrift werden die Begriffe Haftklebemasse und Selbstklebemasse synonym verwendet. Haftklebemassen können grundsätzlich derart definiert werden, dass sie bei Raumtemperatur dauerhaft klebrige Eigenschaften aufweisen. Sie führen bei Raumtemperatur insbesondere ohne Aktivierung durch Lösungsmittel oder Wärme lediglich durch Andrücken an die Oberfläche eine Benetzung herbei, die ausreichende Haftungskräfte ergibt. Die Anforderungen an das konkrete Einsatzgebiet, denen die Haftklebemassen der vorliegenden Klebebänder genügen sollen, werden im Rahmen der vorliegenden Schrift noch näher ausgeführt.

Als "spaltfähig" werden solche Träger bezeichnet, die parallel zu ihrer Flächenausdehnung spaltbar sind, und insbesondere solche Träger, die bezogen auf die Anforderungen in einem Splice-Verfahren auch tatsächlich spalten.

Als spaltfähiger Träger kommen alle spaltfähigen flächigen Trägermaterialien in Frage, insbesondere leicht spaltende Papiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte polymere Verbundsysteme) und polymere Vliesstoffe. Üblicherweise kommt ein Träger zum Einsatz, bei dem die Spaltkraft insgesamt 5 bis 70 cN/cm beträgt, insbesondere 12 bis 60 cN/cm.

Erforderlich ist es, dass die obere Selbstklebemasse und die untere Selbstklebemasse eine hohe Klebkraft aufweisen. Insbesondere muss die Klebkraft dieser Selbstklebemassen auf den jeweiligen Oberflächen (Träger und zu verklebendes Bahnmaterial) größer ausfallen als die für ein Spalten des spaltfähigen Trägers erforderliche Kraft. Vorteilhafte spaltfähige Träger weisen bevorzugt Spaltfestigkeiten von 20 bis 70 cN/cm, insbesondere von 22 bis 60 cN/cm, ganz besonders von 25 bis 50 cN/cm auf.
Besonders bevorzugt ist die Silikonhaftklebemasse eine solche umfassend
a) zumindest ein Polydiorganosiloxan mit dem Gerüstkörper 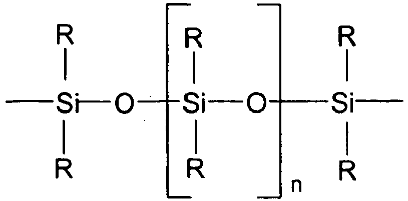 wobei die 2n+4 Substituenten R unabhängig voneinander monovalente Kohlenwasserstoffreste sind und n eine Ganzzahl ist,
   sowie
b) zumindest ein aus (R²)₃SiO_{1/2}-Einheiten ("M-Einheiten") und SiO_{4/2}-Einheiten ("Q-Einheiten") aufgebautes Harz ("MQ-Harz"), wobei die Substituenten R² der M-Einheiten unabhängig voneinander Alkylgruppen, Alkenylgruppen, Alkylsilylgruppen, Hydroxygruppen und/oder Wasserstoff sind.

Bei den MQ-Harzen handelt es sich vorteilhaft um solche mit einem gewichtsmittleren Molekulargewicht M_{w} von 500 g/mol ≤ M_{w} ≤ 100.000 g/mol, bevorzugt von 1.000 g/mol ≤ M_{w} ≤ 20.000 g/mol, ganz bevorzugt von 2.000 g/mol ≤ M_{w} ≤ 5.000 g/mol [die Angaben des mittleren Molekulargewichtes M_{W} und der Polydispersität D in dieser Schrift beziehen sich auf die Bestimmung per Gelpermeationschromatographie (siehe weiter hinten; experimenteller Teil)].

Es hat sich als günstig herausgestellt, wenn Klebemassen eingesetzt werden, bei denen das Anteilsverhältnis - bezogen auf Gewichtsprozent - von Polydiorganosiloxan zu MQ-Harz im Bereich von 20:80 bis 80:20, besser im Bereich von 30:70 bis zu 60:40 liegt.

Eine vorteilhafte Ausführungsform des erfindungsgemäßen Haftklebebandes (Variante V1) stellt ein Haftklebeband für den fliegenden Rollenwechsel von Flachbahnmaterialien, umfassend zumindest einen spaltbaren Träger und zwei Klebemassen-Schichten, wobei mindestens eine der Klebemassen eine - insbesondere additionsvernetzende - Silikonhaftklebemasse ist, umfassend
a) zumindest ein Polydiorganosiloxan der allgemeinen Formel 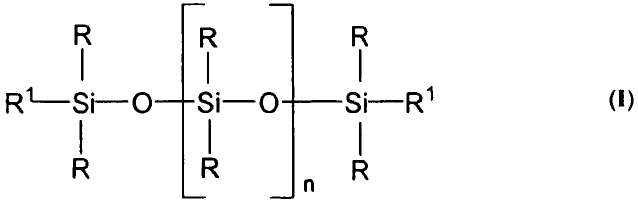 wobei
   - die beiden R¹ unabhängig voneinander gewählte Alkenylgruppen sind,
   - die 2n+4 Substituenten R unabhängig voneinander monovalente Kohlenwasserstoffreste sind und
   - n eine Ganzzahl ist,
b) zumindest ein aus (R²)₃SiO_{1/2}-Einheiten ("M-Einheiten") und SiO_{4/2}-Einheiten ("Q-Einheiten") aufgebautes Harz ("MQ-Harz"),
   wobei
   - die Substituenten R² der M-Einheiten unabhängig voneinander Alkylgruppen, Alkenylgruppen, Alkylsilylgruppen, Hydroxygruppen oder Wasserstoff sind,
c) zumindest einem Organohydrogenpolysiloxan, welches im Mittel mindestens zwei siliziumgebundene Wasserstoffatome pro Polymermolekül aufweist und frei von olefinischen Doppelbindungen ist.

Eine vorteilhafte Ausgestaltung dieser Ausführungsform weist keine weiteren Komponenten in der Silkonhaftklebemasse auf. In weiteren vorteilhaften Ausgestaltungen kann die Haftklebemasse jedoch auch weitere Komponenten und/oder die üblichen für Silikonhaftklebemassen vorteilhaften Additive aufweisen.

Vorteilhaft sind die beiden R¹ des Polydiorganosiloxans **(I)** unabhängig voneinander Alkenylgruppen mit 1 bis 14 C-Atomen, insbesondere Vinylgruppen und/oder Hexenylgruppen.

Besonders vorteilhaft ist es, wenn die Doppelbindung der Alkenylgruppen R¹ des Polydiorganosiloxans **(I)** jeweils endständig ist, also jeweils zwischen dem am weitest entferntesten und dem am zweitweitest entfernten C-Atom der Alkenylgruppe angeordnet ist, gesehen vom Si-Atom, an dem sich die Alkenylgruppe befindet.

Der Durchschnittswert für den Parameter n des Polydiorganosiloxans **(I)** ist insbesondere vorteilhaft derart gewählt, dass das gewichtsmittlere Molekulargewicht M_{w} des Polydiorganosiloxans (I) im Bereich von 7 × 10⁵ g/mol ≤ M_{w} ≤ 8 x 10⁵ g/mol liegt.

Die Polydispersität D des Polydiorganosiloxans **(I)** liegt sehr bevorzugt im Bereich von 2,0 ≤ D ≤ 2,2.

Die Komponente c liegt - bezogen auf die Gesamtzusammensetzung - vorteilhaft mit einem Anteil von bis zu wenigen Prozent vor. Vorteilhaft werden solche Organohydrogenpolysiloxane eingesetzt, deren gewichtsmittleres Molekulargewicht im Bereich von 10³ g/mol ≤ M_{w} ≤ 10⁵ liegt.

Sehr bevorzugte Polydiorganosiloxane der Variante 1 sind solche, die durch die folgenden Formeln **(I-I)** und **(I-II)** wiedergegeben werden,

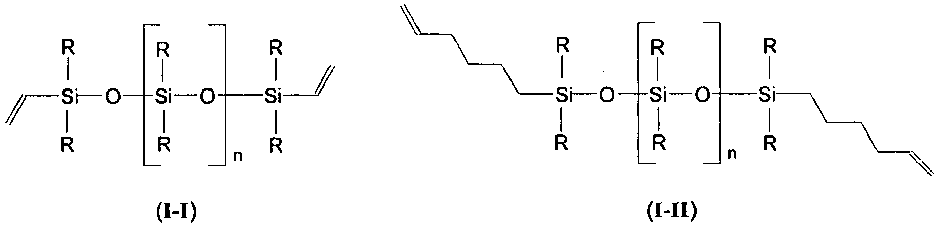

insbesondere vorteilhaft dann, wenn sie auch die vorstehenden Bedingungen für n, M_{w} und D erfüllen.

Eine ganz besonders bevorzugte Ausführungsform der Variante V1 hat ein Polydiorganosiloxan der Formel **(I)** mit einem gewichtsmittleren Molekulargewicht M_{w} = 7,68 x 10⁵ g/mol und einer Polydispersität D = 2,18. Das MQ-Harz hierbei ist ein solches mit einem gewichtsmittleren Molekulargewicht von M_{w} = 2350 g/mol und einer Polydispersität von 2,51. Das Organohydrogenpolysiloxan hierbei weist bevorzugt 1 bis 40 Wasserstoffatome pro Alkenylgruppe des Polydiorganosiloxans auf.

Als besonders günstige Silikonklebemasse zur Verwendung für Klebebänder der Variante V1 für den fliegenden Rollenwechsel hat sich ein kommerziell erhältliches additionsvernetzendes System herausgestellt, nämlich das Produkt DC 7657 ® der Firma Dow Corning, wobei diese Angabe nur beispielhaft und für die Erfindung nicht einschränkend erfolgt. Durch die geeignete, dem jeweiligen Silikonhaftkleber angepassten Wahl der Elektronenstrahldosis (insbesondere im Bereich von 5 kGy bis 50 kGy), der Beschleunigungsspannung (insbesondere im Bereich von 100 kV und 200 kV) sowie der Bahngeschwindigkeit (insbesondere 10 m/min) weist eine derartige Zusammensetzung eine besonders günstige Klebkraft, Anfassklebrigkeit und Wärmescherfestigkeit auf.

Eine weiter vorteilhafte Ausführungsform des erfindungsgemäßen Haftklebebandes (Variante V2) Haftklebeband für den fliegenden Rollenwechsel von Flachbahnmaterialien, umfassend zumindest einen spaltbaren Träger und zwei Klebemassen-Schichten, dadurch gekennzeichnet, dass
mindestens eine der Klebemassen eine - insbesondere kondensationsvernetzende - Silikonhaftklebemasse ist, umfassend
a) zumindest ein Polydiorganosiloxan der allgemeinen Formel 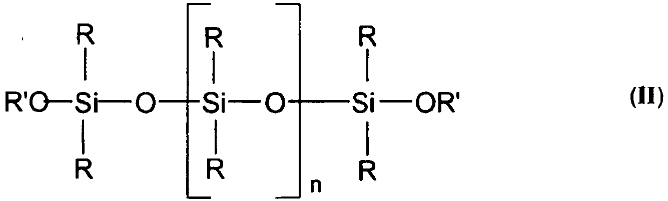 wobei
   - die beiden R' unabhängig voneinander gewählt sind aus der Gruppe umfassend Wasserstoff sowie unverzweigte und verzweigte Alkylreste mit 1 bis 6 Kohlenstoffatomen und/oder Alkylsilylreste und/oder Alkyloxysilylreste,
   - die 2n+4 Substituenten R unabhängig voneinander monovalente Kohlenwasserstoffreste sind und
   - n eine Ganzzahl ist,
b) zumindest ein aus (R²)₃SiO_{1/2}-Einheiten ("M-Einheiten") und SiO_{4/2}-Einheiten ("Q-Einheiten") aufgebautes Harz ("MQ-Harz"),
   wobei
   - die Substituenten R² der M-Einheiten unabhängig voneinander Alkylgruppen, Alkenylgruppen, Alkylsilylgruppen, Hydroxygruppen oder Wasserstoff sind.

Eine vorteilhafte Ausgestaltung dieser Ausführungsform weist keine weiteren Komponenten in der Silkonhaftklebemasse auf. In weiteren vorteilhaften Ausgestaltungen kann die Haftklebemasse jedoch auch weitere Komponenten und/oder die üblichen für Silikonhaftklebemassen vorteilhaften Additive aufweisen.

Als bevorzugt haben sich Verbindungen im Sinne des Polydiorganosiloxans (**II**) für die Variante V2 herausgestellt, bei denen die beiden Substituenten R' Wasserstoffatome sind.

Der Durchschnittswert für den Parameter n des Polydiorganosiloxans (**II**) ist insbesondere vorteilhaft derart gewählt, dass das gewichtsmittlere Molekulargewicht M_{w} des Polydiorganosiloxans (**II**) im Bereich von 6,4 x 10⁵ g/mol ≤ M_{w} ≤ 1,0 x 10⁶ g/mol liegt.

Die Polydispersität D des Polydiorganosiloxans (**II**) liegt sehr bevorzugt im Bereich von 2,3 ≤ D ≤ 2,8, ganz besonders bevorzugt im Bereich von 2,38 ≤ D ≤ 2,80 liegt.

Als besonders günstige Silikonklebemassen zur Verwendung für Klebebänder der Variante V2 für den fliegenden Rollenwechsel haben sich einige kommerziell erhältliche kondensationsvernetzende Systeme herausgestellt, so die Produkte DC 7358 ® der Firma Dow Corning und die Produkte Silgrip PSA 518 ® und Silgrip PSA 6574 ® der Firma Momentive, wobei diese Angabe nur beispielhaft und für die Erfindung nicht einschränkend erfolgt. Durch die geeignete, dem jeweiligen Silikonhaftkleber angepassten Wahl der Elektronenstrahldosis (insbesondere im Bereich von 5 kGy bis 50 kGy), der Beschleunigungsspannung (insbesondere im Bereich von 100 kV und 200 kV) sowie der Bahngeschwindigkeit (insbesondere 10 m/min) weisen derartige Zusammensetzungen eine besonders günstige Klebkraft, Anfassklebrigkeit und Wärmescherfestigkeit auf.

Für die Polydiorganosiloxane aller vorstehend genannten Ausführungsformen ist es günstig, wenn die Substituenten R unabhängig voneinander gewählt sind aus der Gruppe der Kohlenwasserstoffreste mit 1 bis 18 Kohlenstoffatomen, vorteilhafte Kohlenwasserstoffreste sind aliphatische gesättigte Reste oder aromatische Reste. Bevorzugt sind die Polydiorganosiloxane, bei denen die Substituenten R unabhängig voneinander Methylgruppen, unsubstituierte Phenylgruppen und/oder substituierte Phenylgruppen sind. Besonders bevorzugt sind solche Polydiorganosiloxane, bei denen alle Substituenten R Methylgruppen sind, sowie auch solche Polydiorganosiloxane, bei denen ein Teil der Substituenten R Methylgruppen und der Rest der Substituenten R unsubstituierte Phenylgruppen sind, hier insbesondere Poly(dimethyl-co-diphenyl)-siloxane und Poly(dimethyl-co-methylphenyl)siloxane.

Bevorzugt werden die Silikonklebemassen der erfindungsgemäßen Klebebänder mit aktinischer Strahlung vernetzt, ganz besonders bevorzugt durch Elektronenstrahlung. Dabei wurde überraschend festgestellt, dass die Silikonhaftklebemassen ihre Kohäsion erhöhen, aber keine signifikante Verschlechterung der Anfassklebrigkeiten festgestellt wurde. Die durch Elektronenstrahlen vernetzten Silikonhaftklebemassen sind daher von den nach dem Stand der Technik vernetzten Haftklebemassen (beispielsweise Platinkatalysatoren, Benzoylperoxid) unterscheidbar.

Vorteilhaft wird mit einer Elektronenstrahl-Dosis von mehr als 10 kGy, insbesondere mit einer Elektronenstrahl-Dosis von 15 kGy oder mehr bestrahlt. Die Elektronenstrahl-Dosis wird insbesondere derart gewählt, dass der Mikroscherweg-Test (Test C) einen Wert von weniger als 1000 µm aufweist.

Insbesondere vorteilhaft ist es, wenn die Klebemasse eine hinreichende Wärmescherfestigkeit aufweist. Hierzu kann es - je nach chemischer Beschaffenheit der eingesetzten Polydiorganosiloxane, MQ-Harze und die Zusammensetzung der Klebemasse - vorteilhaft sein, die Dosis der Elektronenbestrahlung weiter zu erhöhen. Eine besonders vorteilhafte Ausführungsform der Erfindung ergibt sich damit durch Haftklebemassen, die eben diese Wärmescherfestigkeitserfordernisse erfüllen. Insbesondere vorteilhaft wird mit einer Elektronenstrahl-Dosis von mehr als 15 kGy, bevorzugt wird mit einer Elektronenstrahl-Dosis von 20 Gy oder mehr bestrahlt. Hierdurch kann die Wärmescherfestigkeit vorteilhaft beeinflusst werden. Es werden hervorragende Ergebnisse, die sich in einem SAFT-Test-Ergebnis von weniger als 1000 µm manifestieren, erzielt.

Ganz besonders vorteilhaft bestrahlt man mit einer Dosis von 25 kGy oder mehr. Bei einer Bestrahlung mit 25 kGy lässt sich das Ergebnis des SAFT-Testes (Test D) noch weiter verbessern, ohne das signifikante Verschlechterungen der Klebkräfte oder der Tack-Werte auftreten.

Der Vernetzungsgrad lässt sich durch die Bestimmung des elastischen Anteils im Mikroscherwegtest (Test C) quantifizieren. Dabei bedeuten hohe Werte des elastischen Anteils einen hohen Vernetzungsgrad. Die Elektronenstrahlvernetzung wird daher bevorzugt bis zu Vernetzungsgraden durchgeführt, die den Anforderungen der Anwendung für den Rollenwechsel genügen. Für die erfindungsgemäßen Haftklebebänder ist es sehr vorteilhaft, wenn der elastische Anteil bei mindestens 50 %, besser bei mindestens 60 %, noch besser bei mindestens 75 % liegt.

Ganz besonders vorteilhaft sind solche Silikonhaftklebemassen für die erfindungsgemäßen Haftklebebänder geeignet, die einen elastischen Anteil von mindestens 80 %, noch besser von mindestens 90 % aufweisen.

Die hier im Rahmen dieser Schrift vorgeschlagenen Silikonklebemassen, wie sie für die erfindungsgemäßen Klebebänder hervorragend geeignet sind, können durch Vermessung nach den Bedingungen der Tests A bis D näher charakterisiert werden. Die für die Silikonhaftklebemassen auf den erfindungsgemäßen Klebebändern vorgeschlagenen Vernetzungsparameter (z.B. Elektronenstrahldosis, Vernetzungsgrad) lassen sich dabei ohne weiteres auf die Messproben übertragen.

Die Silikonhaftklebemassen weisen - insbesondere nach Vernetzung - vorteilhaft eine Klebkraft auf Stahl von mindestens 2,0 N/cm, bevorzugt von mindestens 2,5 N/cm und besonders bevorzugt von mindestens 3,0 N/cm auf, wenn die Messmethode Test A1 zugrunde gelegt wird.

Unabhängig hiervon ist es sehr günstig, wenn die vernetzten Silikonklebemassen der erfindungsgemäßen Klebebänder nach der Messmethode Test A2 eine Klebkraft auf Silikon von mindestens 1 N/cm, besser von 1,5 N/cm und noch besser von mindestens 2 N/cm aufweisen. Als ganz besonders vorteilhaft haben sich die Klebebänder herausgestellt, die Silikonklebemassen aufweisen, die unter den Bedingungen des Tests A2 eine Klebkraft auf Silikon von mindestens 2,3 N/cm besitzen.

Ein Parameter, der auf die Eignung insbesondere der Klebemasse, die die Verklebung zu der neuen Flachbahn bewirkt ("obere Klebemasse"), für den Einsatz im fliegenden Rollenwechsel eine wichtige Rolle spielt, ist die Realisierung guter Anfassklebrigkeiten ("Tack"-Eigenschaften). Für die erfindungsgemäßen Klebebänder ist es daher besonders vorteilhaft, wenn sich bezüglich der vernetzten Silikonklebemassen, insbesondere der oberen Silikon-Klebemasse, im Test B1 ("Probe-Test") gemessene streckenbezogene Kräfte von mindestens 0,10 N/mm, besser von mindestens 0,15 N/mm und noch besser von mindestens 0,20 N/mm ergeben.

Unabhängig hiervon ist es sehr vorteilhaft, wenn für die entsprechenden vernetzten Klebemassen im Test B2 ("Loop-Test") Kräfte von mindestens 0,10 N, bevorzugt von mindestens 0,20 N und mehr bevorzugt von mindestens 0,25 N aufweisen.

Ein guter Tack der vernetzten Klebemasse ist insbesondere dann festzustellen, wenn bereits die nicht vernetzten Klebemassen einen guten Tack aufweisen.

Weiter sehr vorteilhaft werden hervorragende Kohäsionskräfte realisiert. Zur Quantifizierung dieses Parameters wird der Test C (Mikroscherweg-Test) herangezogen. Bevorzugt werden bezüglich der vernetzten Silikonklebemassen der erfindungsgemäßen Klebebänder Kohäsionseigenschaften realisiert, dass in diesem Test Mikroscherwege von weniger als 1000 µm, mehr bevorzugt von weniger als 500 µm und noch besser von weniger als 300 µm gemessen werden.

Bei den erfindungsgemäßen Klebebändern handelt es sich um Klebebänder mit mindestens zwei Klebemassenschichten, wobei zumindest eine der Klebemassenschicht eine solche auf Silikonbasis ist, wie sie vorstehend ausführlich beschrieben wurde. Grundsätzlich kann die zumindest zweite Klebemassenschicht identisch oder verschieden sein, so kann die zweite Klebemassenschicht beispielsweise eine solche auf Basis von Polyacrylat, Naturkautschuk, Synthesekautschuk, Polyurethan, silylierten Polyurethanen, Ethylen-Vinylacetat-Copolymeren, Polyisobuthen sowie auf Silikonbasis identischer oder anderer Basis als die bereits beschriebenen Silikonhaftklebemassen sein. Diese Aufzählung ist jedoch im erfinderischen Sinne nicht einschränkend, so dass prinzipiell - je nach konkretem Anforderungsprofil der zu verbindenden Flachbahnmaterialien - auch Haftklebemassen auf Basis anderer Polymere eingesetzt werden können.

Die erfindungsgemäßen Klebebänder für den - insbesondere fliegenden Rollenwechsel - weisen zumindest eine untere Klebemasse auf, die dazu dient, die Klebeverbindung mit der alten, ablaufenden Flachbahn zu realisieren, und zumindest eine obere Klebemasse, die dazu dient, die Klebeverbindung mit dem Anfang der neuen, anzufügenden Flachbahn zu vermitteln.

Üblicherweise werden gleiche Flachbahn miteinander verbunden, dass heißt es wird eine Flachbahn aus dem gleichen Material, aus dem auch die ablaufende Flachbahn besteht, an letztere neu angefügt. Daher kann es vorteilhaft sein, für die obere und die untere Klebemasse die gleichen Klebemassen zu verwenden. Sehr vorteilhaft ist es, wenn beide Klebemassen - untere und obere Klebemasse - solche Silikonklebemassen sind, wie sie in dieser Schrift bisher beschrieben wurden

Da sich an die obere und die untere Klebemasse jedoch aufgrund der unterschiedlichen Bedingungen, denen die jeweiligen Massen im Splicing-Process ausgesetzt sind, auch unterschiedliche Anforderungen ergeben, kann es durchaus vorteilhaft sein, bewusst unterschiedliche Klebemassen einzusetzen, die auf die jeweiligen Anforderungen angepasst sind. So kann es auch sehr vorteilhaft sein, zwei Silikonklebemassen, wie sie im Rahmen dieser Schrift beschrieben werden, einzusetzen, aber die jeweiligen klebtechnischen Eigenschaften unterschiedlich zu wählen und auf die jeweiligen Anforderungen anzupassen.

Insbesondere vorteilhaft eignen sich die Klebebänder, deren Selbstklebemassenschichten eine oder mehrere, sehr bevorzugt alle der folgenden Bedingungen erfüllen: Obere Silikonhaftklebemasse:
- Klebkraft auf Stahl von 2,0 N/cm (Test A1)
- Klebkraft auf einem silikonisierten Haftgrund von 1,0 N/cm (Test A2)
- Anfassklebrigkeit entsprechend einer durch einen Probe Tester gemessenen Kraft von mindestens 0,10 N/mm² (Test B1)
- Anfassklebrigkeit auf einem silikonisierten Haftgrund entsprechend einer durch Loop Tack gemessenen Kraft von mindestens 0,10 N (Test B2)
- Kohäsion entsprechend einem Mikroscherweg (Test C) von weniger als 1000 µm bei einem elastischen Anteil von größer als 60%
- Wärmescherfestigkeit gemäß SAFT-Test (Test D) von einer Scherstrecke geringer als 1000 µm bei 200°C

Untere Silikonhaftklebemasse:
- Klebkraft auf Stahl von 2,0 N/cm (Test A1)
- Klebkraft auf einem silikonisierten Haftgrund von 1,0 N/cm (Test A2)
- Kohäsion entsprechend einem Mikroscherweg (Test C) von weniger als 1000 µm bei einem elastischen Anteil von größer als 60%
- Wärmescherfestigkeit gemäß SAFT-Test (Test D) von einer Scherstrecke geringer als 1000 µm bei 200°C.

Die erfindungsgemäßen Klebebänder weisen zumindest ein spaltfähiges Trägermaterial, zumindest eine obere Klebemasse zur Vermittlung der Verbindung mit der neuen Flachbahn sowie zumindest eine untere Klebemasse zur Verklebung auf der ablaufenden Rolle des Flachbahnmaterials auf.

Für den - insbesondere fliegenden - Rollenwechsel haben sich erfindungsgemäße Klebebänder als besonders vorteilhaft herausgestellt, die eine Gesamtbreite von 20 bis 100 mm, besonders von 30 bis 70 mm aufweisen, insbesondere solche mit einer Gesamtbreite von 38 und solche mit einer Gesamtbreite von 50 mm. Für spezielle Ausführungsformen können die vorteilhaften Ausmaße aber von den vorgenannten Werten abweichen.

In einer vorteilhaften Weise wird der Masseauftrag der oberen Selbstklebemasse in einem Bereich von 30 bis 80 g/m² gewählt, insbesondere in einem Bereich von 35 bis 60 g/m². Der Masseauftrag der Klebemasse der unteren Seite beträgt im bevorzugt 20 bis 60 g/m², insbesondere vorteilhaft ist eine Schichtdicke von 35 bis 50 g/m².

Eine vorteilhafte Ausführungsform der erfindungsgemäßen Klebebänder ist aus einem Hauptträger, der insbesondere nichtspaltend ist, und einer oberen Selbstklebemasse aufgebaut, wobei zumindest ein Teil der Rückseite des Hauptträgers mit einem doppelseitig klebenden, spaltfähige System ausgerüstet ist, welches seinerseits einen spaltfähigen Träger aufweist, der auf seiner Oberseite mit einer Klebemasse zur Verklebung mit dem Hauptträger und auf seiner Unterseite mit der unteren Selbstklebemasse ausgerüstet ist.

In vorteilhaften Varianten ist das spaltfähige System 3 bis 20 mm, insbesondere 6 bis 12 mm breit, insbesondere für die weiter oben genannten Gesamtbreiten des Klebebandes. Das unterklebte, spaltfähige System kann bündig an der einen Längskante des Klebebandes angeordnet sein. Für den Einsatz der Erfindung im fliegenden Rollenwechsel hat es sich aber als sehr vorteilhaft herausgestellt, wenn das unterklebte doppelseitige System in einem Abstand von dieser Längskante angeordnet ist, insbesondere in einem Abstand von 1 bis 7 mm, besser in einem Abstand von 1,5 bis 3,5 mm.

Wie Versuche ergeben haben, ist es für eine erfolgreiche Prozessführung bei hohen Geschwindigkeiten vorteilhaft, die Kraft für den Spaltvorgang in den spaltfähigen Träger des Spaltstreifens einzuleiten, da es sonst zu lokal unkontrollierten Reißprozessen (oben als "Reißer" bezeichnet) kommt. Hierzu dient der überstehende, durch den Abstand des Spaltstreifens von der Längskante definierte Abschnitt des Klebebandes als Krafteinleithilfe. Reißer konnten dann besonders erfolgreich vermieden werden, wenn dieser Abstand eine gewisse Größe erreicht.

Ist die Einrückung allerdings zu groß (größer 3,5 mm), so kommt es vermehrt zu einem Umschlagen des überstehenden, vorderen Abschnitts des Spleißklebebandes und ebenfalls zu unkontrolliertem Verhalten während des Spleißprozesses, wie man auch in Versuchen feststellt.

In günstigen Ausführungen können auch mehr als ein spaltfähiges System auf der Unterseite des Klebebandes vorgesehen sein. In diesem Sinne sind beispielsweise auch Aufbauten, wie sie in der DE 198 30 674 A und der DE 101 23 981 A dargestellt sind, vom Erfindungsgedanken umfasst, wenn sie mit Silikonselbstklebemassen ausgerüstet sind. Weiterhin kann es günstig für bestimmte Anwendungen sein, auf der Rückseite ein weiteres nichtspaltendes System vorzusehen. Solche Klebebänder sind in der WO 03/24850 A beschrieben, diese Aufbauten in Verbindung mit den in der vorliegenden Schrift beschriebenen Silikonselbstklebemassen sind ebenfalls von der Erfindung umfasst.

Vorteilhaft können die erfindungsgemäßen Klebebänder auf ihrer oberen Klebemasse mit einem Trennmaterial versehen sein, insbesondere um die Klebemasse während der Lagerung zu schützen. Verwendet können hier die dem Fachmann für Silikonhaftklebemassen geläufigen Materialien, wie beispielsweise Fluor-Silikone. Das Trennmaterial kann bevorzugt mit einem Schlitz, einer Perforation oder ähnlichem - insbesondere in Längsrichtung des Klebebandes angeordnet - versehen sein, insbesondere zu dem Zweck, um beim teilweisen Unterkleben des Klebebandes unter das Ende der obersten Lage des neuen Rolle das Trennmaterial teilweise entfernen zu können und so den Bereich der Klebemasse, der sonst freiliegen würde, weiterhin zu schützen.

Vorteilhaft kann der Schlitz bzw. die Perforation in einem Abstand von 20 bis 40 mm von der Längskante (LK2) des Klebebandes angeordnet sein, welche der Längskante (LK1) gegenüber liegt, bei der oder in deren Nähe das spaltfähige System angeordnet ist.

Die erfindungsgemäßen Klebebänder können optional durch geeignete Vorrichtungen derart ausgestaltet sein, dass sie maschinell erkennbar sind. Dies kann beispielsweise durch optisch oder anderweitig detektierbare Bausteine erfolgen. Es sei insbesondere verwiesen auf den Offenbarungsgehalt der Schriften WO 03/18451 A, WO 03/18452 A, WO 03/18453 A, WO 03/18454 A, die dort beschriebenen Aufbauten können ebenfalls vorteilhaft für das erfindungsgemäße Klebeband realisiert werden.

Der Spaltmechanismus der erfindungsgemäßen Klebebänder kann alternativ auch derart realisiert werden, wie es in der DE 102 10 192 A vorgeschlagen wird.

Es kann vorteilhaft sein, die erfindungsgemäßen Klebebänder derart auszugestalten, dass mindestens diejenige der Längskanten, an der beim fliegenden Rollenwechsel das Spalten des Spaltträgers beginnt, einen Zackenschnitt aufweist gemäß einem Produktaufbau, wie dies beispielsweise in den in der DE 100 58 956 A dargestellt ist. Unter bestimmten Prozessbedingungen hat es sich nämlich gezeigt, dass ein fliegender Rollenwechsel mit den mit Zackenschnitt versehenen erfindungsgemäßen Klebebändern durch den sehr geringen Anspaltkraftwert in der Zackenspitze und mit zunehmender Zackenfläche kontinuierlich ansteigendem Kraftwert zuverlässiger gelingt. Reißer werden damit wirksam vermieden.

Die Schriften DE 42 33 521 A, EP 450 312 A, EP 566 880 A, EP 757 657 A, US 4,905,924 A, US 6,432,241 A, US 6,740,379 A und WO 91/08159 zeigen weitere Beispiele mit Klebebändern für den - insbesondere fliegenden - Rollenwechsel von Flachbahnmaterialien, die jeweils mit einer oberen sowie einer unteren Selbstklebemasse ausgerüstet sind. Auch die Ausführungsformen der vorliegenden Erfindung, die man dadurch erhält, dass man mindestens eine, bevorzugt beide der Klebemassenschichten der vorstehend genannten Schriften als Silikonklebemasse ausgestaltet, wie sie im Rahmen der vorliegenden Schrift als für die Erfindung vorteilhaft dargestellt sind, sind daher von dem erfindungsgemäßen Gegenstand mit umfasst.

Weiterhin kann es vorteilhaft sein, statt in Längsrichtung quasi "unendlich" ausgedehnter Klebebänder Klebeetiketten, also abgelängte Klebebandstücke, einzusetzen.

Im folgenden sollen die erfindungsgemäßen Klebebänder unter Bezugnahme auf beispielhafte Abbildungen näher beschrieben werden. Es zeigen hierbei
Fig. 1 eine schematische seitliche Darstellung einer Ausbildung des erfindungsgemäßen Klebebandes (dreilagiger Aufbau, quer zur Längsrichtung des Klebebandes dargestellt), und
Fig. 2 eine schematische seitliche Darstellung einer weiteren Ausbildung des erfindungsgemäßen Klebebandes (fünflagiger Aufbau, quer zur Längsrichtung des Klebebandes dargestellt).

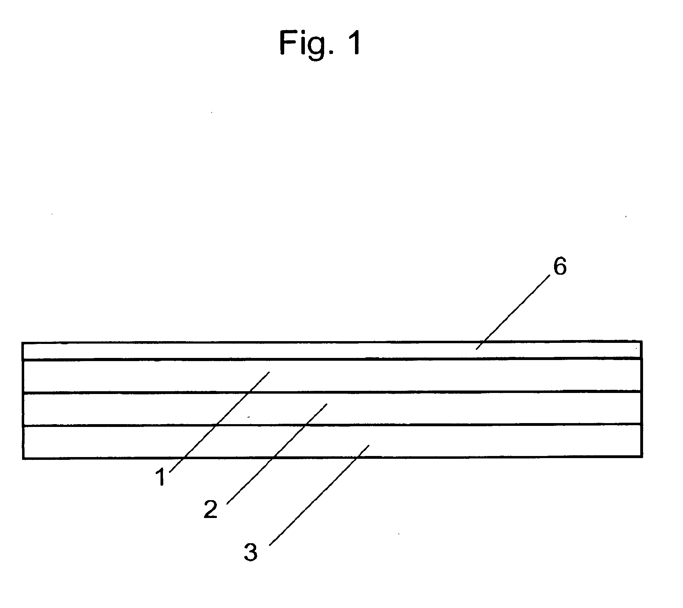

In Fig. 1 ist ein erfindungsgemäßes Klebeband dargestellt, das für den fliegenden Rollenwechsel von auf Rollen aufgewickeltem Flachbahnmaterial mit silkonisierten Oberflächen sowie Flachbahnmaterial mit Silikonoberflächen geeignet ist. Das Klebeband ist als dreilagiger Aufbau aus dem spaltfähigen Träger 2 ausgebildet, der an seiner oberen Seite mit der oberen Selbstklebemasse 1 und an seiner unteren Seite mit der unteren Selbstklebeschicht 3 beschichtet ist. Ein derartiger Aufbau ist insbesondere dann einsetzbar, wenn der spaltfähige Träger 2 entlang seiner Flächenausdehnung eine hinreichende mechanische Belastbarkeit aufweist, um den Belastungen, die beim Verbinden der Bahn der fast abgespulten Rolle mit dem Bahnanfang der neuen Rolle auftreten, standhalten zu können.

Das Klebeband umfasst zusätzlich ein Trennsystem 6 zur nichtklebenden Abdeckung der oberen Selbstklebemasse 1, so dass die klebende obere Seite des Klebebandes bei Lagerung geschützt ist. Als Trennsystem können alle herkömmlichen Trennpapiere verwendet werden, etwa silikonisierte Trennpapiere oder silikonisierte Trennfolien. Das Trennsystem kann hierbei einteilig oder mehrteilig (nicht in Fig. 1 dargestellt) ausgeführt sein.

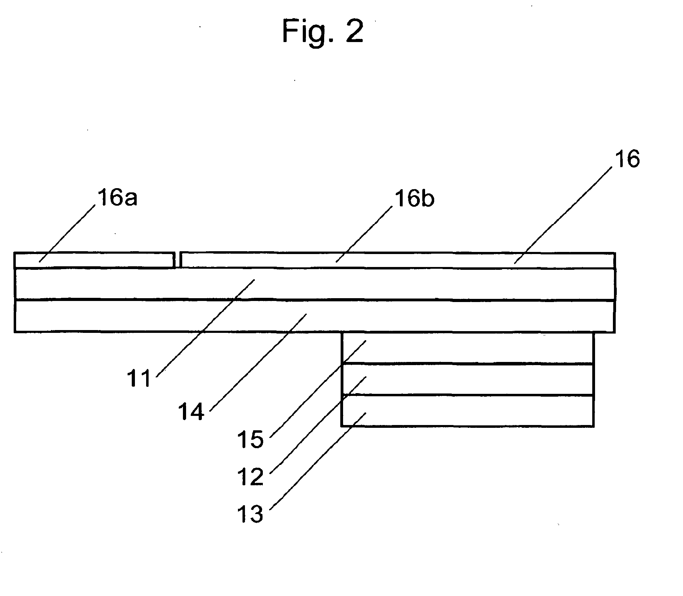

In Fig. 2 ist eine weitere besonders günstige Ausbildung des erfindungsgemäßen Klebebandes als fünflagiger Aufbau dargestellt. Diese Ausbildung des Klebebandsystems umfasst einen spaltfähigen Träger 12 und einen nichtspaltfähigen Träger 14, die miteinander verbunden sind. Die Verbindung ist hier als separate, verbindende Selbstklebemasse 15 ausgeführt, die die obere Seite des spaltfähigen Trägers 12 mit einem Teil der unteren Seite des nichtspaltfähigen Trägers 14 verbindet. Somit ist der nichtspaltfähige Träger 14 an seiner oberen Seite mit der oberen Selbstklebemasse 11 beschichtet und an einem Teil seiner unteren Seite mit der verbindenden Selbstklebemasse 15, die den spaltfähigen Träger 12 am nichtspaltfähigen Träger 14 verankert. An der Unterseite des spaltfähigen Trägers 12 befindet sich die untere Klebemassenschicht 13. Das System aus spaltfähigem Träger 12 und Klebemassenschichten 13 und 15 ist hierbei gegenüber dem nichtspaltfähigen Träger 14 eingerückt bzw. versetzt angeordnet.

Die in Fig. 2 dargestellte Ausbildung weist ferner zusätzlich ein Trennsystem 16 zur nichtklebenden Abdeckung der oberen Selbstklebemasse 11 auf. Besonders vorteilhaft ist das hier dargestellte zweiteilige Trennsystem 16a/16b, das in Längsrichtung in ein hinteres Abdeckungsteil 16a und ein vorderes Abdeckungsteil 16b unterteilt ist, etwa mittels einer Perforation oder einem Schlitz. Dies hat den Vorteil, dass das Klebeband zunächst mit dem Bahnanfang der neuen Rolle verklebt werden kann, wozu lediglich der klebende Bereich des Klebebands unter dem hinteren Abdeckungsteil 16a freigelegt wird und der klebende Bereich zur Verklebung mit der Bahn der alten Rolle durch das vordere Abdeckungsteil 16b weiterhin abgedeckt und somit geschützt bleibt.

Die Erfindung umfasst weiter die Verwendung des erfindungsgemäßen Klebebands zum Verkleben von auf Rollen aufgewickeltem Flachbahnmaterial mit silikonisierten Oberflächen und mit Oberflächen aus Silikon im Verlauf eines fliegenden Rollenwechsels. Durch Einsatz des Klebebands wird die Effizienz des Splice-Verfahrens insgesamt signifikant gesteigert.

Schließlich bietet die Erfindung ein Splice-Verfahren für den fliegenden Rollenwechsel von auf Rollen aufgewickeltem unpolaren Flachbahnmaterial, insbesondere solchen Flachbahnmaterialien mit silikonisierten Oberflächen oder mit Oberflächen aus Silikon, wobei dem Ende der obersten Bahn einer neuen Rolle des Flachbahnmaterials das erfindungsgemäße Klebeband (zumindest teilweise) hinterklebt wird, während die untere Seite des Klebebandes mit der darunter liegenden Bahn der neuen Rolle verklebt wird und diese hierdurch sichert, worauf die so ausgerüstete neue Rolle neben einer fast gänzlich abgespulten, zu ersetzenden Rolle platziert und auf die im wesentlichen gleiche Oberflächengeschwindigkeit beschleunigt wird, die neue Rolle dann gegen die oberste Bahn der alten Rolle gedrückt wird, wobei die offen liegende Selbstklebemasse des Klebebandes mit der alten Bahn bei im wesentlichen gleichen Geschwindigkeiten der Bahnen verklebt werden, während zugleich das spaltfähige System spaltet und die Selbstklebemassen des spaltfähigen Systems mit den beiden gespalteten Resten des spaltfähigen Trägers nicht klebend abdeckt.

Bevorzugt ist dabei dieses Verfahren derart, dass ein Klebeband mit einer geschlitzten oder perforierten Abdeckung (Trennmaterial) eingesetzt wird. Von der geschlitzten Abdeckung wird beim Unterkleben zunächst nur der kleinere Teil abgezogen und das Klebeband hinter die oberste Papierbahn einer neuen Papierrolle mit dem freiliegenden Teil der Selbstklebemasse geklebt, während der größere Teil der Abdeckung erst kurz vor dem Einsatz zum fliegenden Rollenwechsel abgezogen wird.

Gegenstand der Erfindung ist weiterhin ein Verfahren zur Herstellung der erfindungsgemäßen Haftklebebänder, wobei die Silikonhaftklebemasse zumindest einseitig auf ein Trägermaterial beschichtet wird und auf diesem Trägermaterial mit Elektronenstrahlen vernetzt wird. Bevorzugt wird - wie weiter oben bereits dargestellt - mit einer Elektronenstrahl-Dosis von mindestens 10 kGy, besser mindestens 15 kGy, vorteilhafter mindestens 20 kGy, ganz besonders bevorzugt von mindestens 25 kGy vernetzt. Weiter bevorzugt wird die Vernetzung bis zu einem Vernetzungsgrad durchgeführt, der einem elastischen Anteil von mindestens 50 %, besser mindestens 60 %, noch besser mindestens 75 %, besonders bevorzugt mindestens 90 % entspricht, ermittelbar im Mikroscherwegtest (Test C).

### Experimente

### Gelpermeationschromatographie GPC

Die Angaben des gewichtsmittleren Molekulargewichtes M_{w} und der Polydisperistät D in dieser Schrift beziehen sich auf die Bestimmung per Gelpermeationschromatographie. Die Bestimmung erfolgt an 50 µl klarfiltrierter Probe (Probenkonzentration 3 g/l). Als Eluent wird Toluol eingesetzt. Die Messung erfolgt bei 23 °C. Als Vorsäule wird eine Säule Typ PSS-SDV, 5 µ, 10³ Å, ID 8,0 mm x 50 mm verwendet. Zur Auftrennung werden die Säulen des Typs PSS-SDV, 5 µ, 10² Å sowie 10³ Å und 10⁵ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PDMS-Standards (Polydimehtylsiloxan-Kalibrierung)].

### Klebkraft-Test (Test A)

Die Bestimmung der Klebkraft auf Stahl wurde hierbei wie folgt durchgeführt (tesa Test A1): Als definierter Haftgrund (Klebkraftplatte) wurde eine geschliffene Stahlplatte eingesetzt. Vor jeder Messung wurde diese Platte mit Aceton gereinigt. Als zu untersuchende Probe wurde ein Standardpolyesterträger mit einer Stärke von 23 µm mit der jeweiligen Selbstklebemasse einseitig beschichtet (Selbstklebemassenauftrag: 50 g/m²). Ein 20 mm breiter Streifen des beschichteten Standardpolyesterträgers wurde unter Belastung (4 kg) auf den Haftgrund aufgedrückt. Unmittelbar im Anschluss daran wurde das Klebeband in einem Winkel von 180 ° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen. Die Bestimmung der Klebkraft auf Silikon wurde wie folgt durchgeführt (tesa Test A2): Als definierter Haftgrund wurde eine einseitig silikonisierte PET-Folie (50 µm) eingesetzt, die mit der nicht-silikonisierten Seite mittels eines doppelseitigen Klebebandes auf einer ABS-Platte fixiert wurde. Als zu untersuchende Probe wurde ein Standardpolyesterträger mit einer Stärke von 23 µm mit der jeweiligen Silikonselbstklebemasse einseitig beschichtet (Selbstklebemassenauftrag: 50 g/m²). Ein 20 mm breiter Streifen des beschichteten Standardpolyesterträgers wurde unter Belastung (4 kg) auf die fixierte, silikonisierte PET-Folie aufgedrückt. Unmittelbar im Anschluss daran wurde das Klebeband in einem Winkel von 180 ° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen. Zur Kalibrierung des Messverfahrens "tesa Test A2" wurde ein kommerzielles Testklebeband zur Prüfung von nichtklebenden Beschichtungen (Typ "tesa 7475" der tesa AG; Klebkraft auf Stahl laut Spezifikation: 31,25 N/25 mm) entsprechend diesem Messverfahren untersucht; die hierbei ermittelte Klebkraft auf der fixierten, silikonisierten PET-Folie betrug durchschnittlich 0,3 N/cm.

### Tack/Anfasskletrigkeit (Test B)

Die Bestimmung der Anfassklebrigkeit erfolgte mittels Probe Tester (tesa Test B1) und dem Loop Tack Test (tesa Test B2).

Bei der Bestimmung der Anfassklebrigkeit mittels Probe Tack (tesa Test B1) wurde ein Stempel mit definierter Kontaktfläche und einer festgelegten Kraft auf die Klebemasse gefahren und nach einer bestimmten Kontaktzeit mit definierter Geschwindigkeit wieder abgezogen. Als Maß für den Tack wird die gesamte Ablösearbeit (in N/mm) angegeben, die aufgebracht werden muss, um den Stempel von der Probe zu entfernen. Die Bestimmung erfolgte in einem Prüfklima von 23 ± 1°C und 50 ± 5% relativer Luftfeuchtigkeit. Als zu untersuchende Probe wurde ein Standardpolyesterträger mit einer Stärke von 23 µm mit der jeweiligen Silikonselbstklebemasse einseitig beschichtet (Selbstklebemassenauftrag: 50 g/m²). Die luftblasenfreie Fixierung der Probe auf einer Stahlplatte erfolgte mit einem doppelseitigen Klebeband. Die Temperierungs- und Aufziehzeit betrug mindestens 12 Stunden bei Prüfklima. Die Prüfplatte mit der zu untersuchenden Probe wurde in die Fixiervorrichtung gelegt und der mit Aceton gereinigte und temperierte (10 min) Stempel mittig auf die Klebefläche gefahren, wieder abgezogen und die dabei aufzuwendende Kraft gemessen. Der Messwert (in N/mm) ergab sich als Mittelwert aus 10 Einzelmessungen. Als Messparameter wurden eine Abzugsgeschwindigkeit von 1.5 mm·s⁻¹, eine Kontaktzeit von 0.01 s und eine Andruckkraft von 0.7 N gewählt. Der Stahlstempel hat einen Durchmesser von 2,0 mm. Als Messgeräte wurden die Texture Analyser TA.XT 2i sowie TA.XT plus der Firma SMS (Stable Microsystem Ltd.) eingesetzt.

Bei der Bestimmung der Anfassklebrigkeit mittels Loop Tack (tesa Test B2) wurde ein zu einer Schlaufe geformter Teststreifen mit definierter Kontaktfläche und einer festgelegten Kraft auf die Klebemasse gefahren und nach einer bestimmten Kontaktzeit mit definierter Geschwindigkeit wieder abgezogen. Als Maß für den Tack wird die Kraftspitze (in N) angegeben, die überwunden werden muss, um die Schlaufe von der Probe zu entfernen. Die Bestimmung erfolgte in einem Prüfklima von 23 ± 1°C und 50 ± 5 % relativer Luftfeuchtigkeit. Als definierter Haftgrund wurde ein silikonisiertes Papier (71 µm) eingesetzt, das mittels eines doppelseitigen Klebebandes auf einer ABS-Platte fixiert wurde. Zur Kalibrierung des Untergrundes des Messverfahrens "tesa Test B2" wurde die Trennkraft mittels eines kommerziellen Testklebebandes zur Prüfung von nichtklebenden Beschichtungen (Typ "tesa 7475" der tesa AG; Klebkraft auf Stahl laut Spezifikation: 31,25 N/25 mm) ermittelt; die hierbei ermittelte Trennkraft auf des Trennpapiers betrug durchschnittlich 3 - 10 cN/cm. Als zu untersuchende Probe wurde ein Standardpolyesterträger mit einer Stärke von 23 µm mit der jeweiligen Silikonselbstklebemasse einseitig beschichtet (Selbstklebemassenauftrag: 50 g/m²). Zusätzlich wurden die Proben rückseitig mit einem einseitigen Klebeband (tesa 4124) verstärkt. Der Messwert (in N) ergab sich als Mittelwert aus 5 Einzelmessungen. Als Messparameter wurden eine Messgeschwindigkeit von 600 mm·min⁻¹, eine Verzögerung der Richtungsänderung von 50 ms und eine Andruckkraft (Soll) von 0.15 N gewählt, wobei der Teststreifen eine Länge von 100 mm (eingespannt: 40 mm) und eine Breite von 10 mm aufwies. Die jeweiligen Muster wurden vor dem Einspannen in Längsrichtung geknickt, um eine definierte und kleine Messfläche zu erzielen.

### Mikroscherweg-Test Test C

Dieser Test dient der Prüfung der Scherfestigkeit von Klebebändern unter einer Temperaturbelastung von 40°C.

Messprobenpräparation: Die Klebebandprobe (auf 23 µm PET-Folie beschichtete Haftklebemasse(50 g/m²)) wird auf eine geschliffene, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe beträgt Höhe x Breite = 13 mm x 10 mm, die Probe wird senkrecht aufgehängt, überragt am oberen Rand die Stahl-Prüfplatte um 2 mm und wird bündig mit einem stabilen Klebestreifen verstärkt, der als Auflage für den Wegmessfühler dient.

Messung: Die zu messende Probe wird am unteren Ende mit einem Gewicht von 100 g belastet. Die Stahl-Prüfplatte mit der verklebten Probe wird auf 40 °C aufgeheizt. Gemessen wird der Rutschweg der Probe mittels Wegmessfühler über einen Zeitraum von 15 Minuten. Nach diesen ersten 15 Minuten wird das Gewicht entfernt und die Relaxation für den Zeitraum von weiteren 15 Minuten gemessen. Der Quotient (Scherstrecke nach 15 min (µm) - Scherstrecke nach 30 min (µm)/ Scherstrecke nach 15 min (µm)) ergibt den elastischen Anteil (in %), welcher ein Maß für die Netzwerkdichte darstellt. Die maximale Scherstrecke ist auf 1000 µm festgelegt, bei Überschreiten wird der Test abgebrochen. Prüfklima: Raumtemperatur 23 ± 1 °C, relative Luftfeuchtigkeit 50 ± 5 %.

### SAFT Test (Shear Adhesion Failure Temperature) Test D

Dieser Test dient der Schnellprüfung der Scherfestigkeit von Klebebändern unter Temperaturbelastung.

Messprobenpräparation: Die Klebebandprobe (auf 23 µm PET-Folie beschichtete Haftklebemasse(50 g/m²)) wird auf eine geschliffene, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe beträgt Höhe x Breite = 13 mm x 10 mm, die Probe wird senkrecht aufgehängt, überragt am oberen Rand die Stahl-Prüfplatte um 2 mm und wird bündig mit einem stabilen Klebestreifen verstärkt, der als Auflage für den Wegmessfühler dient.

Messung: Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt. Gemessen wird der Rutschweg der Probe mittels Wegmessfühler in Abhängigkeit von Temperatur und Zeit. Der maximale Rutschweg ist auf 1000 µm festgelegt, bei Überschreiten wird der Test abgebrochen. Prüfklima: Raumtemperatur 23 ± 1 °C, relative Luftfeuchtigkeit 50 ± 5 %.
Positives Testergebnis:
- Scherweg nach Erreichen der Endtemperatur (200 °C) angegeben in µm.
Negatives Testergebnis:
- Temperatur bei Erreichen des maximalen Scherwegs (1000 µm) angegeben in °C.

### Beispiele:

Der Index "PDMS" steht im folgenden für das Polydiorganosiloxan.

### Additionsvernetzende Systeme

### Beispiel A-1: Referenzmasse

Es wurden 599 g einer 30 %igen Lösung eines radikalisch polymerisierten Gerüstpolymers bestehend aus 47 % Acrylsäure, 48 % Butylacrylat und 5 % Vinylcaprolactam in einem 1:1:1 Gemisch aus Wasser, Isopropanol und Aceton mit 397 g Ethomeen C-25 (Akzo) und 2,9 g Aluminniumchelat abgemischt. Das Gerüstpolymer ist ferner durch eine massenmittlere Molmasse von 9*10⁵ g/mol und eine Polydispersität von 8 gekennzeichnet. Die so hergestellte Haftklebemasse wird als 30 %ige Lösung in einem 1:1:1 Gemisch aus Wasser, Isopropanol und Aceton auf eine geprimerte 23 µm dicke PET-Folie beschichtet. Nach 120 minütiger Konditionierung bei Raumtemperatur wurde das Lappenmuster für 20 Minuten bei 100 °C getrocknet. Der Masseauftrag betrug nach der Trocknung 50 g/m².

### Beispiel A-2a: DC 7657 ® (1. Referenzbeispiel mit Pt-Vernetzung)

Spezifizierung der Klebemasse DC 7657 ®:
M_{w, PDMS} = 7.68 x 10⁵ g/mol, D_{PDMS} = 2.18, M_{w, MQ-Harz} = 4670 g/mol, D_{MQ-Harz} = 2.51, Anteil PDMS (bezogen auf Summe der Anteile PDMS und QM-Harz) 49,25 Gew-%, Anteil MQ-Harz (bezogen auf Summe der Anteile PDMS und QM-Harz) 50,75 Gew.-%, Hersteller Dow Corning, Substituenten R = Methyl

Die Silikonmasse DC 7657 ® wurde mit Siedegrenzenbenzin (Sdp. = 60 - 90°C) auf einen Feststoffgehalt von 45% verdünnt, mit 0,4% Syl-Off 4000 (Pt-Katalysatormischung) versetzt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m².

### Beispiel A-2b: DC 7657 ® (2. Referenzbeispiel mit Pt-Vernetzung)

Die Silikonmasse DC 7657 ® wurde mit Siedegrenzenbenzin (Sdp. = 60 - 90°C) auf einen Feststoffgehalt von 45% verdünnt, mit 1,5% Syl-Off 4000 (Pt-Katalysatormischung) versetzt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m².

### Beispiel A-3a: DC_7657 ®

Die Silikonmasse DC 7657 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parametern vernetzt: 15 kGy, 135 kV.

### Beispiel_A-3b: DC_7657 ®

Die Silikonmasse DC 7657 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parametern vernetzt: 20 kGy, 135 kV.

### Beispiel A-3c: DC 7657 ®

Die Silikonmasse DC 7657 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parametern vernetzt: 25 kGy, 135 kV.

### Beispiel A-3d: DC 7657 ®

Die Silikonmasse DC 7657 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parametern vernetzt: 50 kGy, 135 kV.

In Tabelle 1 sind die klebtechnischen Eigenschaften für die vorstehenden Beispiele dargestellt.

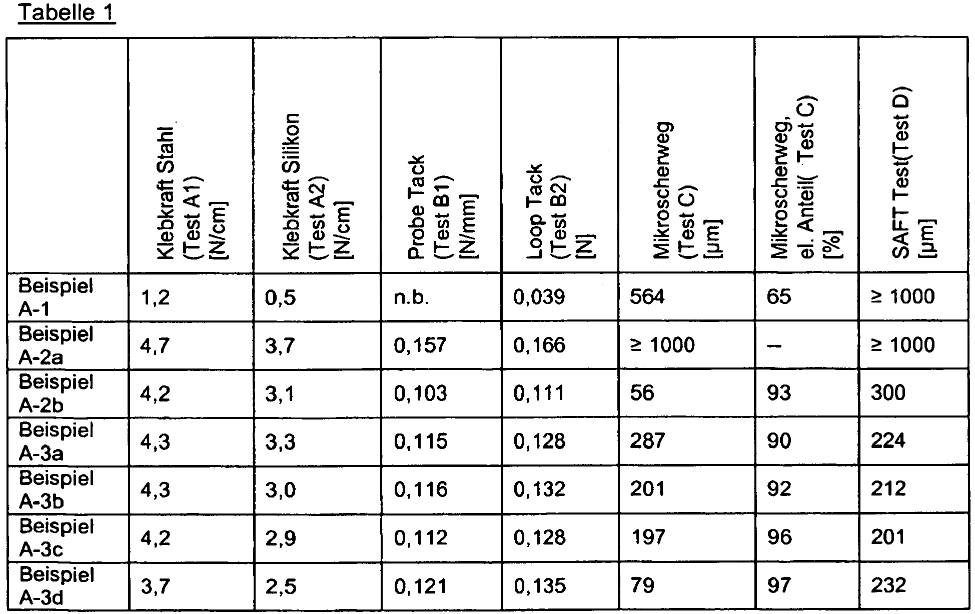

Das Beispiel A-1 ist eine Polyacrylathaftklebemasse, welche den Stand der Technik darstellt. Für die Beispiele A-2a-b wurde der Silikonhaftkleber mittels Pt-Katalysator vernetzt; die Beispiele dienen als Referenz. Die Beispiele 3a-d wurden mittels Elektronenstrahl vernetzt.

Die Beispiele A-2a-b und A-3a-d in Tabelle 1 belegen, dass im Vergleich zur Polyacrylatreferenz (Beispiel 1) in allen Fällen eine signifikant höhere Klebkraft auf Silikonuntergründen gegeben ist. Des Weiteren zeigt ein SAFT-Test-Vergleich, dass gute Kohäsionseigenschaften bei erhöhten Temperaturen durch die Elektronenstrahlvernetzten Massen erzielt werden (Beispiele A-3b-d). Besonders deutlich wird anhand aller Beispiele, dass eine Erhöhung der Elektronenstrahl-Dosis in jedem Fall die Kohäsion gesteigert (Verkürzung der Mikroscherwege), die Wärmescherfestigkeit verbessert (Verkürzung der SAFT-Scherwege) und gleichzeitig die Anfassklebrigkeit/Tack davon unbeeinflusst ist während hingegen die Platin-katalysierte Vernetzung einen signifikanten Tackverlust zur Folge hat.

Für die additionsvernetzten Beispiele (entsprechend der Ausführungsvariante V1) lassen sich durchweg elastische Anteile von über 90 % verwirklichen, wobei Klebkräfte auf Silikon von mehr als 2 N/cm, Tack-Werte im Probe-Test von mehr als 0,1 N/mm und Tack-Werte im Loop-Test von mehr als 0,12 N realsiert werden.

### Kondensationsvernetzende Systeme

### Beispiel K-1: Referenzmasse_(identisch_ zu Beispiel_A-1)

Es wurden 599 g einer 30 %igen Lösung eines radikalisch polymerisierten Gerüstpolymers bestehend aus 47 % Acrylsäure, 48 % Butylacrylat und 5 % Vinylcaprolactam in einem 1:1:1 Gemisch aus Wasser, Isopropanol und Aceton mit 397 g Ethomeen C-25 (Akzo) und 2,9 g Aluminniumchelat abgemischt. Das Gerüstpolymer ist ferner durch eine massenmittlere Molmasse von 9*10⁵ g/mol und eine Polydispersität von 8 gekennzeichnet. Die so hergestellte Haftklebemasse wird als 30 %ige Lösung in einem 1:1:1 Gemisch aus Wasser, Isopropanol und Aceton auf eine geprimerte 23 µm dicke PET-Folie beschichtet. Nach 120 minütiger Konditionierung bei Raumtemperatur wurde das Lappenmuster für 20 Minuten bei 100 °C getrocknet. Der Masseauftrag betrug nach der Trocknung 50 g/m².

### Beispiel K-2a: DC Q2-7735 ® (als nicht-tackige Si-PSA-Referenz)

Spezifizierung der Klebemasse DC Q2-7735 ®:
M_{w, PDMS} = 3.79 x 10⁵, D_{PDMS} = 1.92, M_{w, MQ-Harz} = 2310, D_{MQ-Harz} = 2.51, Anteil PDMS (bezogen auf Summe der Anteile PDMS und QM-Harz) 55,74 Gew-%, Anteil MQ-Harz (bezogen auf Summe der Anteile PDMS und QM-Harz) 44,26 Gew.-%, Hersteller Dow Corning, Substituenten R = Methyl

Die Silikonmasse DC Q2-7735 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m².

### Beispiel K-2b: DC_Q2-7735 ®_(als_nicht-tackige Si-PSA-Referenz)

Die Silikonmasse DC Q2-7735 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 10 kGy, 135 kV, 10 m/min.

### Beispiel K-2c: DC Q2-7735 ® (als nicht-tackige Si-PSA-Referenz)

Die Silikonmasse DC Q2-7735 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 15 kGy, 135 kV, 10 m/min.

### Beispiel K-2d: DC Q2-7735 ® (als nicht-tackige Si-PSA-Referenz)

Die Silikonmasse DC Q2-7735 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 20 kGy, 135 kV, 10 m/min.

### Beispiel K-3a: DC 7358 ®

Spezifizierung der Klebemasse DC 7358 ®:
M_{w, PDMS} = 6.44 x 10⁵, D_{PDMS} = 2.38, M_{w, MQ-Harz} = 2350, D_{MQ-Harz} = 1.83, Anteil PDMS (bezogen auf Summe der Anteile PDMS und QM-Harz) 46,70 Gew-%, Anteil MQ-Harz (bezogen auf Summe der Anteile PDMS und QM-Harz) 53,30 Gew.-%, Hersteller Dow Corning, Substituente R = Methyl

Die Silikonmasse DC 7358 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m².

### Beispiel K-3b: DC 7358 ®

Die Silikonmasse DC 7358 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 15 kGy, 135 kV, 10 m/min.

### Beispiel K-3c:_DC 7358 ®

Die Silikonmasse DC 7358 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 20 kGy, 135 kV, 10 m/min.

### Beispiel K-3d: DC 7358 ®

Die Silikonmasse DC 7358 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 25 kGy, 135 kV, 10 m/min.

### Beispiel K-4a:_Silgrip PSA 518 ®

Spezifizierung der Klebemasse Silgrip PSA 518 ®:
M_{w, PDMS} = 9.16 x 10⁵, D_{PDMS} = 2.80, M_{w, MQ-Harz} = 4110, O_{MQ-Harz} = 2.27, Anteil PDMS (bezogen auf Summe der Anteile PDMS und QM-Harz) 51,20 Gew-%, Anteil MQ-Harz (bezogen auf Summe der Anteile PDMS und QM-Harz) 48,80 Gew..-%, Hersteller: Momentive, Substituenten R = Methyl und Phenyl

Die Silikonmasse Silgrip PSA 518 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m².

### Beispiel K-4b:_Silgrip PSA 518 ®

Die Silikonmasse Silgrip PSA 518 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 15 kGy, 135 kV, 10 m/min.

### Beispiel K-4c:_Silgrip PSA 518 ®

Die Silikonmasse Silgrip PSA 518 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 20 kGy, 135 kV, 10 m/min.

### Beispiel K-5a:_Silgrip PSA 6574 ®

Spezifizierung der Klebemasse Silgrip PSA 6574 ®:
M_{w, PDMS} = 1.00 x 10⁶, D_{PDMS} = 2.78, M_{w, MQ-Harz} = 4230, D_{MQ-Harz} = 2.00, Anteil PDMS (bezogen auf Summe der Anteile PDMS und QM-Harz) 30,15 Gew-%, Anteil MQ-Harz (bezogen auf Summe der Anteile PDMS und QM-Harz) 69,85 Gew.-%, Hersteller: Momentive, Substituenten R = Methyl und Phenyl

Die Silikonmasse Silgrip PSA 6574 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m².

### Beispiel. K:5b: Silgrip PSA 6574_®

Die Silikonmasse Silgrip PSA 6574 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 15 kGy, 135 kV, 10 m/min.

### Beispiel K-5c: Silgrip PSA 6574 ®

Die Silikonmasse Silgrip PSA 6574 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parmetern vernetzt: 20 kGy, 135 kV, 10 m/min.

### Beispiel K-5d: Silgrip PSA 6574 ®

Die Silikonmasse Silgrip PSA 6574 ® wurde mit Siedegrenzenbenzin (Sdp. = 60 - 90°C) auf einen Feststoffgehalt von 45% verdünnt und anschließend auf eine geprimerte 23 µm dicke PET-Folie aufgetragen. Nach 30 minütiger Konditionierung bei Raumtemperatur wurde das Lappenmuster für 15 Minuten bei 120 °C getrocknet. Der Masseauftrag betrug nach der Trocknung 50 g/m². Abschließend wurde das Muster mit folgenden Elektronenstrahl-Parametern vernetzt: 25 kGy, 135 kV, 10 m/min.

In Tabelle 2 sind die klebtechnischen Eigenschaften für die weiteren Beispiele dargestellt.

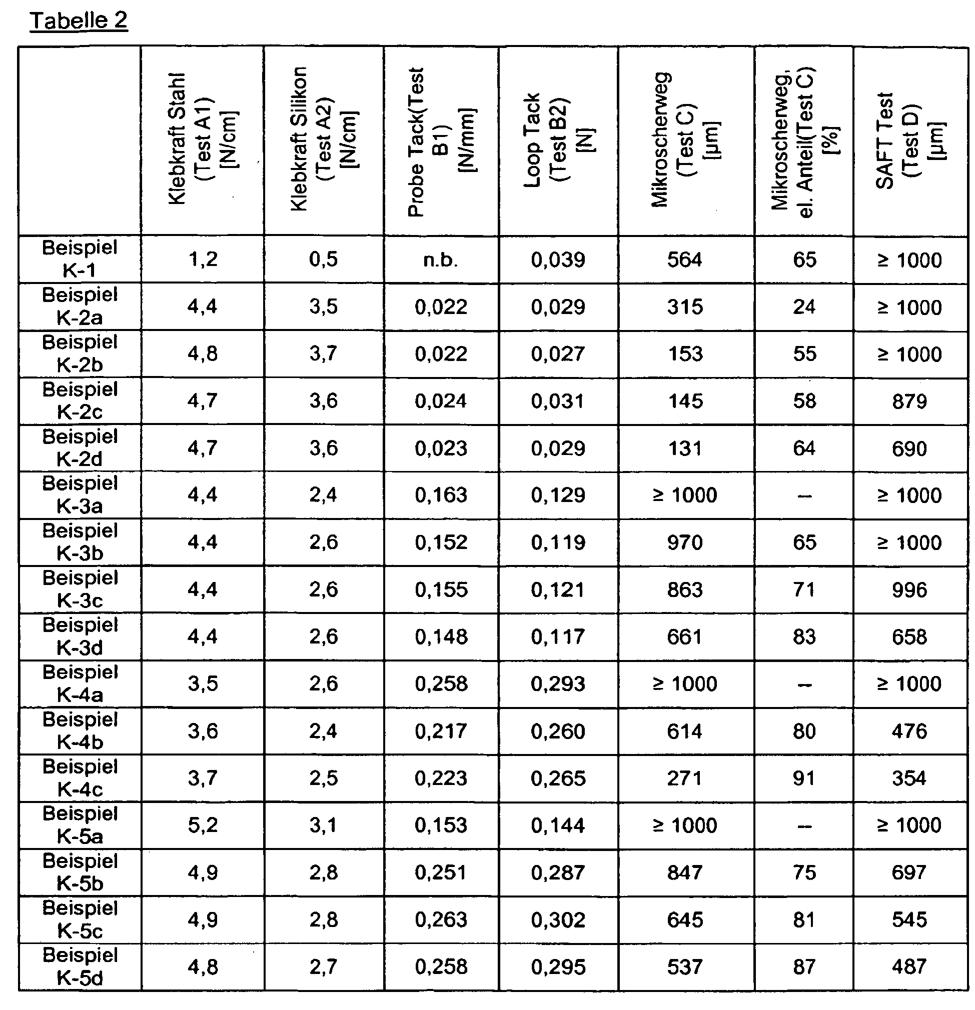

Das Beispiel K-1 ist eine Polyacrylathaftklebemasse, welche den Stand der Technik darstellt. Für die Beispiele K-2a-d wurde ein nicht-tackiger Silikonhaftkleber eingesetzt; die Beispiele dienen als Referenz.

Die Beispiele K-2a-d, K-3a-d, K-4a-c und K-5a-d in Tabelle 1 belegen, dass im Vergleich zur Polyacrylatreferenz (Beispiel 1) in allen Fällen eine signifikant höhere Klebkraft auf Silikonuntergründen gegeben ist. Des Weiteren zeigt ein SAFT-Test-Vergleich, dass gute Kohäsionseigenschaften bei erhöhten Temperaturen nur durch ausreichend Elektronenstrahl-vernetzte Massen erzielt werden (Beispiele K-2c-d, K-3c-d, K-4b-c und K-5b-d), wohingegen die Silikonhaftklebemassen, die nicht Elektronenstrahl bzw. die mit einer zu geringen Dosis nachbehandelt wurden (Beispiele K-2a-b, K-3a-b, K-4a und K-5a), in allen Fällen eine Scherstrecke von deutlich mehr als 1000 µm erreichen. Besonders deutlich wird anhand der erfindungsgemäßen Beispiele, dass eine Erhöhung der Elektronenstrahl-Dosis in jedem Fall die Kohäsion gesteigert (Verkürzung der Mikroscherwege), die Wärmescherfestigkeit verbessert (Verkürzung der SAFT-Scherwege) und gleichzeitig die Anfassklebrigkeit/Tack davon unbeeinflusst ist.

### Ergebnisse

Die - insbesondere additionsvernetzenden - Silikonhaftklebstoffe, wie sie für die Ausführungsform V1 des erfindungsgemäßen Haftklebebandes eingesetzt werden, werden üblicherweise nach dem Stand der Technik entweder als lösungsmittelhaltige Klebstoffe in Toluol oder in Toluol/Xylol Gemischen oder als 100% Systeme verwendet und im Falle kommerziell erhältlicher Produkte in dieser Form vom jeweiligen Hersteller zur Verfügung gestellt. Derartige Systeme werden nach dem Stande der Technik mittels Platinkatalysatoren bei 90 - 120°C vernetzt. Diese so vernetzbaren Massen zeigen in der Regel niedrige, für eine Verwendung als Klebemassen für den fliegenden Rollenwechsel nicht hinreichende Anfassklebrigkeiten, die abhängig von der Vernetzungsreaktion sind, da die Anzahl und die Art der Netzpunkte durch die Vinyl- und Wasserstofffunktionalitäten vorgegeben sind. So sind des Weiteren hohe Wärmescherfestigkeiten einstellbar. Allerdings weist dieses System auch Nachteile auf. Platinkatalysatoren sind einerseits sehr kostenintensiv, andererseits reagieren sie chemisch sehr sensibel auf Verunreinigungen und werden leicht vergiftet. Darüber hinaus müssen diese Verbindungen ebenfalls in einem zusätzlichen Prozessschritt in den Silikonkleber eingearbeitet werden, wonach dieser danach eine reduzierte Topfzeit, also Verarbeitungszeit, aufweist.

Ausreichend gute Haftklebeeigenschaften der - insbesondere kondensationsvernetzenden - Haftklebemassen, wie sie für die Klebeband-Variante V2 eingesetzt werden, werden häufig bereits nach dem Verdampfen der Lösungsmittel erzielt. Allerdings weisen diese unvernetzten Silikonhaftklebstoffe nur eine geringe Wärmescherfestigkeit auf. Das Anwendungsfenster deckt nur den Bereich bis maximal 120 °C, oftmals nur bis 90 °C, ab. Um die geforderte Wärmescherfestigkeit - insbesondere von 250 °C und mehr - zu erreichen, ist es vorteilhaft, die Silikonhaftklebstoffe zusätzlich einer Vernetzungsreaktion zu unterwerfen, welche die Anfassklebrigkeit im Falle der Verbnetzungsmethoden nach dem Stand der Technik negativ beeinflusst. Konventionell handelt es sich hierbei um chemische Vernetzungsreaktionen.

Im Fall dieser Silikonkleber bestehend aus Polysiloxan der Formel (**II**) und MQ-Harzen werden herkömmlich Peroxide als Vernetzungsreagentien eingesetzt. Bezüglich der Wärmescherfestigkeit lassen sich mit Peroxiden einigermaßen gute Ergebnisse erzielen. Allerdings ist es konventionell nicht möglich, die Kohäsion zu steigern, ohne die Anfassklebrigkeit signifikant zu minimieren. Zudem sind mit peroxidischen Reagentien weitere Nachteile verbunden. Zum einen ist die Lagerung und Handhabung von Peroxiden als potentiell gefährlich einzustufen. Des Weiteren wird die Zahl der Prozessschritte sowie die Kosten notwendigerweise durch das Einmischen in den Silikonkleber erhöht. Und schließlich verlangen Peroxide, die zur Vernetzung von Silikonhaftkleber eingesetzt werden können, Reaktionstemperaturen von mindestens 160 °C. Unter zu Hilfenahme von Aminbeschleunigern ist es zwar möglich, die Reaktionsgeschwindigkeit zu erhöhen bzw. die Reaktionstemperatur zu erniedrigen, allerdings muss dann eine verminderte UV-Stabilität gepaart mit einer Gelbverfärbung der Silikonhaftklebemasse in Kauf genommen werden. Außerdem können die Silikonhaftklebemassen dabei vollständig vernetzen und so den Tack vollkommen verlieren.

Überraschender Weise bietet die Vernetzung mittels aktinischer Strahlung, insbesondere durch Elektronenstrahlen, gegenüber den vorher genannten konventionellen Verfahren deutliche Vorteile. Ein ausgesprochen positiver, überraschender und unerwarteter Aspekt der Elektronenstrahlhärtung (Elektronenstrahl) sowohl gegenüber der Vernetzung mittels Platinkatalysatoren als auch mittels Peroxiden ist die Tatsache, dass die Vernetzung und damit die Kohäsion des Silikonhaftklebers über einen weiteren Bereich stufenlos variiert werden kann, ohne dabei die Anfassklebrigkeit in Mitleidenschaft zu ziehen. Zusätzlich kann die Elektronenstrahl-Dosis während der Beschichtung im inline-Prozess geändert bzw. angepasst werden, so dass in einem Beschichtungsprozess Klebebänder mit verschieden hohen Masseaufträgen individuell vernetzt und produziert werden können.

Erfindungsgemäß vorteilhaft ist die Silikonklebemasse auf dem Klebeband elektronenstrahlvernetzt. Es konnte überraschend und für den Fachmann in nicht zu erwartender Weise gefunden werden, dass die Silikonklebemassen gemäß der vorstehend genannten Charakterisierung bei der Vernetzung mittels Elektronenstrahlen zwar die gewünschte Kohäsionserhöhung erfahren, dabei aber nicht ihre hervorragenden Eigenschaften bezüglich Tack und Adhäsionsvermögen einbüßen.

Durch Bestrahlung mit energiereicher Strahlung (Elektronenstrahlung) geeigneter Dosisbereiche lassen sich dabei die Parameter Tack, Adhäsion, Kohäsion und Wärmescherfestigkeit im Zusammenspiel auf das gewünschte Anforderungsprofil optimieren. Innerhalb vorteilhafter Dosisgrenzen kann dabei für jede Klebemasse gemäß erfindungsgemäßer Charakterisierung eine Dosis gefunden werden, bei der die Parameter ein Optimum in Hinblick auf die Gesamtanforderungen annehmen.

Die erfindungsgemäß angebotenen Klebebänder sind damit für die Anforderungen, die der fliegende Rollenwechsel von Flachbahnmaterialien mit Silikonoberflächen oder silikonisierten Oberflächen stellt, überraschenderweise hervorragend geeignet. Es ist gelungen, das erforderliche Eigenschaftsprofil einzustellen und zu optimieren. So können überraschend Klebebänder angeboten werden, die eine gute Haftklebrigkeit bezüglich silikonhaltiger Oberflächen aufweisen und bei sehr guten Tackwerten auch gute Kohäsionseigenschaften besitzen.

Mit den erfindungsgemäßen Klebebändern ist es erfolgreich und ohne Prozessfehler gelungen, den fliegenden Rollenwechsel von silikonisierten Flachbahnmaterialien und von Flachbahnmaterialien mit Silikonoberfläche durchzuführen.

## Patentansprüche

1. Haftklebeband für den fliegenden Rollenwechsel von Flachbahnmaterialien, umfassend zumindest einen spaltbaren Träger und zwei Klebemassen-Schichten,
**dadurch gekennzeichnet, dass**
mindestens eine der Klebemassen eine Silikonhaftklebemasse ist.

2. Haftklebeband nach Anspruch 1, **dadurch gekennzeichnet, dass** die Silikonhaftklebemasse eine elektronenstrahlvernetzte Silikonhaftklebemasse ist.

3. Haftklebeband nach Anspruch 2, **dadurch gekennzeichnet, dass**
die Haftklebemasse mindestens einen Vernetzungsgrad besitzt, der einem elastischen Anteil von mindestens 50 % aufweist, ermittelbar im Mikroscherwegtest (Test C).

4. Haftklebeband nach einem der vorangehenden Ansprüche, **dadurch gekennzeichnet, dass** die Silikonhaftklebemasse
a) zumindest ein Polydiorganosiloxan mit dem Gerüstkörper 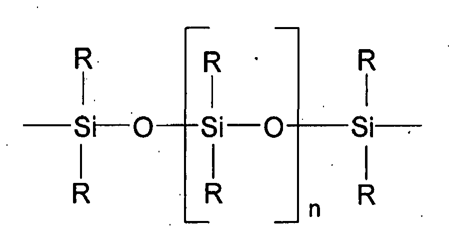 umfasst, wobei
- die 2n+4 Substituenten R unabhängig voneinander monovalente Kohlenwasserstoffreste sind und
- n eine Ganzzahl ist,
sowie
b) zumindest ein aus (R²)₃SiO_{1/2}-Einheiten ("M-Einheiten") und SiO_{4/2}-Einheiten ("Q-Einheiten") aufgebautes Harz ("MQ-Harz") umfasst,
wobei
- die Substituenten R² der M-Einheiten unabhängig voneinander Alkylgruppen, Alkenylgruppen, Alkylsilylgruppen, Hydroxygruppen oder Wasserstoff sind.

5. Haftklebeband für den fliegenden Rollenwechsel von Flachbahnmaterialien, umfassend zumindest einen spaltbaren Träger und zwei Klebemassen-Schichten,
**dadurch gekennzeichnet, dass**
mindestens eine der Klebemassen eine Silikonhaftklebemasse ist, umfassend
a) zumindest ein Polydiorganosiloxan der allgemeinen Formel 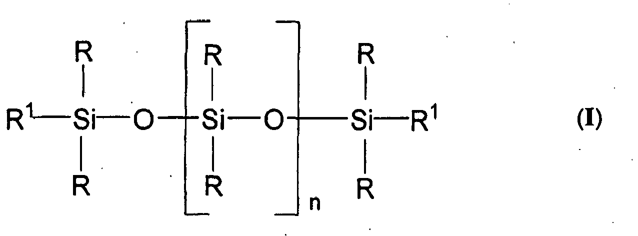 wobei
- die beiden R¹ unabhängig voneinander gewählte Alkenylgruppen sind,
- die 2n+4 Substituenten R unabhängig voneinander monovalente Kohlenwasserstoffreste sind und
- n eine Ganzzahl ist,
b) zumindest ein aus (R²)₃SiO_{1/2}-Einheiten ("M-Einheiten") und SiO_{4/2}-Einheiten ("Q-Einheiten") aufgebautes Harz ("MQ-Härz"),
wobei
- die Substituenten R² der M-Einheiten unabhängig voneinander Alkylgruppen, Alkenylgruppen, Alkylsilylgruppen, Hydroxygruppen oder Wasserstoff sind,
c) zumindest einem Organohydrogenpolysiloxan, welches im Mittel mindestens zwei siliziumgebundene Wasserstoffatome pro Polymermolekül aufweist und frei von olefinischen Doppelbindungen ist.

6. Haftklebeband nach Anspruch 5, **dadurch gekennzeichnet, dass** die beiden R¹ unabhängig voneinander gewählte Alkenylgruppen mit 1 bis 14 C-Atomen sind, insbesondere Vinylgruppen oder Hexenylgruppen.

7. Haftklebeband nach einem der Ansprüche 5 oder 6, **dadurch gekennzeichnet, dass** die Doppelbindung der Alkenylgruppe endständig ist, also zwischen dem am weitest entferntesten und dem am zweitweitest entfernten C-Atom der Alkenylgruppe angeordnet ist, gesehen vom Si-Atom, an dem sich die Alkenylgruppe befindet.

8. Haftklebeband nach einem der Ansprüche 5 bis 7, **dadurch gekennzeichnet, dass** der Durchschnittswert für n derart gewählt ist, dass das gewichtsmittlere Molekulargewicht M_{w} des Polydiorganosiloxans (**I**) im Bereich von 7 x 10⁵ g/mol ≤ M_{w} ≤ 8 x 10⁵ g/mol liegt.

9. Klebeband nach einem der Ansprüche 5 bis 8, **dadurch gekennzeichnet, dass** die Polydispersität D des Polydiorganosiloxans (I) im Bereich von 2,0 ≤ D ≤ 2,2 liegt.

10. Haftklebeband für den fliegenden Rollenwechsel von Flachbahnmaterialien, umfassend zumindest einen spaltbaren Träger und zwei Klebemassen-Schichten,
**dadurch gekennzeichnet, dass**
mindestens eine der Klebemassen eine Silikonhaftklebemasse ist, umfassend
a) zumindest ein Polydiorganosiloxan der allgemeinen Formel 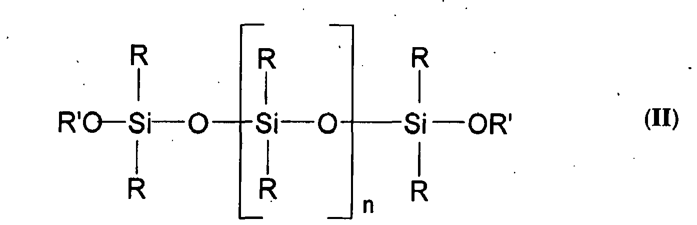 wobei
- die beiden R' unabhängig voneinander gewählt sind aus der Gruppe umfassend Wasserstoff sowie unverzweigte und verzweigte Alkylreste mit 1 bis 6 Kohlenstoffatomen und/oder Alkylsilylreste und/oder Alkyloxysilylreste,
- die 2n+4 Substituenten R unabhängig voneinander monovalente Kohlenwasserstoffreste sind und
- n eine Ganzzahl ist,
b) zumindest ein aus (R²)₃SiO_{1/2}-Einheiten ("M-Einheiten") und SiO_{4/2}-Einheiten ("Q-Einheiten") aufgebautes Harz ("MQ-Harz"),
wobei
- die Substituenten R² der M-Einheiten unabhängig voneinander Alkylgruppen, Alkenylgruppen, Alkylsilylgruppen, Hydroxygruppen oder Wasserstoff sind.

11. Haftklebeband nach Anspruch 10, **dadurch gekennzeichnet, dass** die beiden Substituenten R' Wasserstoffatome sind.

12. Haftklebeband nach einem der Ansprüche 10 oder 11, **dadurch gekennzeichnet, dass** der Durchschnittswert für n derart gewählt ist, dass das gewichtsmittlere Molekulargewicht M_{w} des Polydiorganosiloxans (**II**) im Bereich von 6,4 x 10⁵ g/mol ≤ M_{w} ≤ 1,0 x 10⁶ g/mol liegt.

13. Klebeband nach einem der Ansprüche 10 bis 12, **dadurch gekennzeichnet, dass** die Polydispersität D des Polydiorganosiloxans (**II**) im Bereich von 2,3 ≤ D ≤ 2,8 liegt.

14. Haftklebeband nach einem der vorangehenden Ansprüche, **dadurch gekennzeichnet, dass** die Substituenten R unabhängig voneinander gewählt sind aus der Gruppe der Kohlenwasserstoffreste mit 1 bis 18 Kohlenstoffatomen.

15. Haftklebeband nach einem der vorangehenden Ansprüche, **dadurch gekennzeichnet, dass** die Substituenten R unabhängig voneinander gewählt sind aus der folgenden Gruppe, gebildet aus Methylgruppen, unsubstituierten Phenylgruppen und substituierten Phenylgruppen.

16. Haftklebeband nach einem der vorangehenden Ansprüche, **dadurch gekennzeichnet, dass** das MQ-Harz ein solches mit einem gewichtsmittleren Molekulargewicht M_{w} von 500 g/mol ≤ M_{w} ≤ 100.000 g/mol ist.

17. Verfahren zur Herstellung von Haftklebebändern nach einem der vorangehenden Ansprüche, **dadurch gekennzeichnet, dass**
Die Silikonhaftklebemasse zumindest einseitig auf ein Trägermaterial beschichtet wird und auf diesem Trägermaterial mit Elektronenstrahlen vernetzt wird.

18. Verfahren nach Anspruch 17, **dadurch gekennzeichnet, dass**
Mit einer Elektronenstrahl-Dosis von mindestens 10 kGy, besser mindestens 15 kGy, vorteilhafter mindestens 20 kGy, ganz besonders bevorzugt von mindestens 25 kGy vernetzt wird.

19. Verfahren nach Anspruch 18, **dadurch gekennzeichnet, dass**
die Vernetzung bis zu einem Vernetzungsgrad durchgeführt wird, der einem elastischen Anteil von mindestens 50 %, besser mindestens 60 %, noch besser mindestens 75 %, besonders bevorzugt mindestens 90 % entspricht, ermittelbar im Mikroscherwegtest (Test C).

## Claims

1. Pressure-sensitive adhesive tape for flying splice of flat web materials, comprising at least one splittable carrier and two layers of adhesive, **characterized in that** at least one of the adhesives is a pressure-sensitive silicone adhesive (silicone PSA).

2. Pressure-sensitive adhesive tape according to Claim 1, **characterized in that** the silicone PSA is an electron-beam-crosslinked silicone PSA.

3. Pressure-sensitive adhesive tape according to Claim 2, **characterized in that** the pressure-sensitive adhesive possesses at least one degree of crosslinking which has an elastic component of at least 50% as determinable in the microshear travel test (test C).

4. Pressure-sensitive adhesive tape according to any one of the preceding claims, **characterized in that** the silicone PSA comprises
a) at least one polydiorganosiloxane having the structure 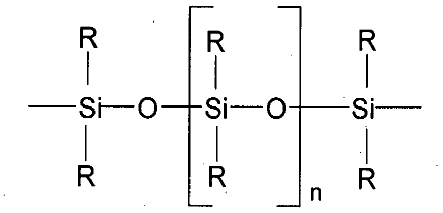 where
- the 2n+4 substituents R independently of one another are monovalent hydrocarbon radicals and
- n is an integer,
and also comprises
b) at least one resin ("MQ resin") constructed from (R²)₃SiO_{1/2} units ("M units") and SiO_{4/2} units ("Q units")
where
- the substituents R² of the M units independently of one another are alkyl groups, alkenyl groups, alkylsilyl groups, hydroxyl groups or hydrogen.

5. Pressure-sensitive adhesive tape for flying splice of flat web materials, comprising at least one splittable carrier and two layers of adhesive, **characterized in that** at least one of the adhesives is a pressure-sensitive silicone adhesive (silicone PSA) comprising
a) at least one polydiorganosiloxane of the general formula 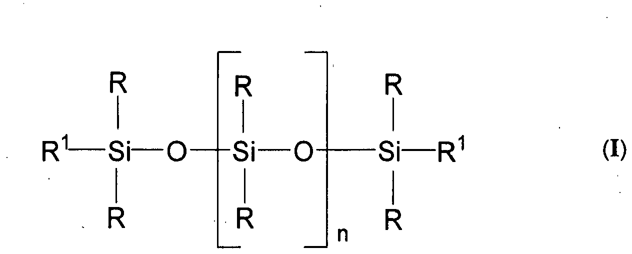 where
- the two radicals R¹ are alkenyl groups chosen independently of one another,
- the 2n+4 substituents R independently of one another are monovalent hydrocarbon radicals and
- n is an integer,
b) at least one resin ("MQ resin") constructed from (R²)₃SiO_{1/2} units ("M units") and SiO_{4/2} units ("Q units")
where
- the substituents R² of the M units independently of one another are alkyl groups, alkenyl groups, alkylsilyl groups, hydroxyl groups or hydrogen,
c) at least one organohydrogenpolysiloxane which contains on average at least two silicon-bonded hydrogen atoms per polymer molecule and is free from olefinic double bonds.

6. Pressure-sensitive adhesive tape according to Claim 5, **characterized in that** the two radicals R¹ are alkenyl groups chosen independently of one another and having 1 to 14 C atoms, more particularly vinyl groups or hexenyl groups.

7. Pressure-sensitive adhesive tape according to either of Claims 5 and 6, **characterized in that** the double bond of the alkenyl group is terminal, i.e. is located between the furthest-removed and the second-furthest-removed C atom of the alkenyl group, as seen from the Si atom on which the alkenyl group is located.

8. Pressure-sensitive adhesive tape according to any one of Claims 5 to 7, **characterized in that** the average value for n is chosen such that the weight-average molecular weight M_{w} of the polydiorganosiloxane (I) is in the range of 7 x 10⁵ g/mol ≤ M_{w} ≤ 8 x 10⁵ g/mol.

9. Adhesive tape according to any one of Claims 5 to 8, **characterized in that** the polydispersity D of the polydiorganosiloxane (I) is in the range of 2.0 ≤ D ≤ 2.2.

10. Pressure-sensitive adhesive tape for flying splice of flat web materials, comprising at least one splittable carrier and two layers of adhesive, **characterized in that** at least one of the adhesives is a pressure-sensitive silicone adhesive (silicone PSA) comprising
a) at least one polydiorganosiloxane of the general formula 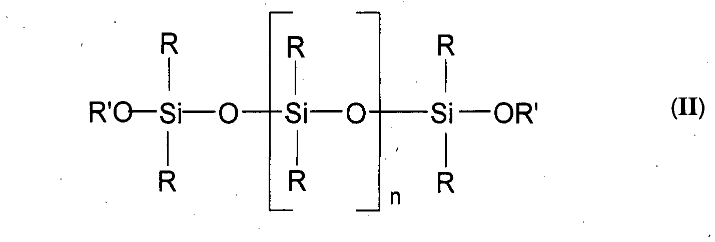 where
- the two radicals R' are chosen independently of one another from the group consisting of hydrogen and also unbranched and branched alkyl radicals having 1 to 6 carbon atoms and/or alkylsilyl radicals and/or alkyloxysilyl radicals,
- the 2n+4 substituents R independently of one another are monovalent hydrocarbon radicals and
- n is an integer,
b) at least one resin ("MQ resin") constructed from (R²)₃SiO_{1/2} units ("M units") and SiO_{4/2} units ("Q units"),
where
- the substituents R² of the M units independently of one another are alkyl groups, alkenyl groups, alkylsilyl groups, hydroxyl groups or hydrogen,

11. Pressure-sensitive adhesive tape according to Claim 10, **characterized in that** the two substiuents R' are hydrogen atoms.

12. Pressure-sensitive adhesive tape according to either of Claims 10 and 11, **characterized in that** the average value for n is chosen such that the weight-average molecular weight M_{w} of the polydiorganosiloxane (II) is in the range of 6.4 x 10⁵ g/mol ≤ M_{w} ≤ 1.0 x 10⁶ g/mol.

13. Adhesive tape according to any one of Claims 10 to 12, **characterized in that** the polydispersity D of the polydiorganosiloxane (II) is in the range of 2.3 ≤ D ≤ 2.8.

14. Pressure-sensitive adhesive tape according to any one of the preceding claims, **characterized in that** the substituents R are chosen independently of one another from the group of hydrocarbon radicals having 1 to 18 carbon atoms.

15. Pressure-sensitive adhesive tape according to any one of the preceding claims, **characterized in that** the substituents R are chosen independently of one another from the following group formed from methyl groups, unsubstituted phenyl groups and substituted phenyl groups.

16. Pressure-sensitive adhesive tape according to any one of the preceding claims, **characterized in that** the MQ resin is one having a weight-average molecular weight M_{w} of 500 g/mol ≤ M_{w} ≤ 100.000 g/mol.

17. Method of producing pressure-sensitive adhesive tapes according to any one of the preceding claims, **characterized in that** the silicone PSA is coated onto at least one side of a carrier material and is crosslinked on said carrier material with electron beams.

18. Method according to Claim 17, **characterized in that** crosslinking is performed with an electron-beam dose of at least 10 kGy, more preferably at least 15 kGy, more advantageously at least 20 kGy, very preferably of at least 25 kGy.

19. Method according to Claim 18, **characterized in that** the crosslinking is carried out up to a degree of crosslinking which corresponds to an elastic component of at least 50%, more preferably at least 60%, more preferably still at least 75%, with particular preference at least 90%, as determinable in the microshear travel test (test C).

## Revendications

1. Bande autoadhésive pour le remplacement volant de rouleaux de matériaux en bande plate, comprenant au moins un support dissociable et deux couches de masse adhésive, **caractérisée en ce qu'**au moins une des masses adhésives est une masse autoadhésive à base de silicium.

2. Bande autoadhésive selon la revendication 1, **caractérisée en ce que** la masse autoadhésive à base de silicium est une masse autoadhésive à base de silicium réticulée par un rayonnement électronique.

3. Bande autoadhésive selon la revendication 2, **caractérisée en ce que** la masse autoadhésive présente au moins un degré de réticulation qui présente une proportion élastique d'au moins 50%, pouvant être déterminée dans le test de déplacement sous l'effet d'un microcisaillement (Test C).

4. Bande autoadhésive selon l'une quelconque des revendications précédentes, **caractérisée en ce que** la masse autoadhésive à base de silicium comprend
a) au moins un polydiorganosiloxane présentant le corps de structure 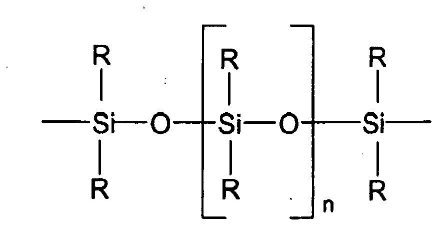 dans lequel
- les 2n+4 substituants R représentent, indépendamment les uns des autres, des radicaux hydrocarbonés monovalents et
- n vaut un nombre entier,
ainsi que
b) au moins une résine constituée par des unités (R²)₃SiO_{1/2} ("unités M") et des unités SiO_{4/2} ("unités Q") ("résine MQ"),
- les substituants R² des unités M représentant, indépendamment les uns des autres, des groupes alkyle, des groupes alcényle, des groupes alkylsilyle, des groupes hydroxy ou hydrogène.

5. Bande autoadhésive pour le remplacement volant de rouleaux de matériaux en bande plate, comprenant au moins un support dissociable et deux couches de masse adhésive, **caractérisée en ce qu'**au moins une des masses adhésives est une masse autoadhésive à base de silicium, comprenant
a) au moins un polydiorganosiloxane de formule générale 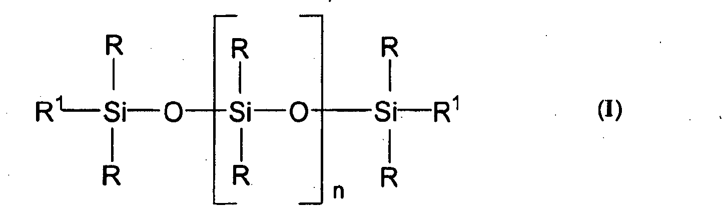 dans laquelle
- les deux R¹ représentent des groupes alcényle choisis indépendamment l'un de l'autre,
- les 2n+4 substituants R représentent, indépendamment les uns des autres, des radicaux hydrocarbonés monovalents et
- n vaut un nombre entier,
b) au moins une résine constituée par des unités (R²)₃SiO_{1/2} ("unités M") et des unités SiO_{4/2} ("unités Q") ("résine MQ"),
- les substituants R² des unités M représentant, indépendamment les uns des autres, des groupes alkyle, des groupes alcényle, des groupes alkylsilyle, des groupes hydroxy ou hydrogène,
c) au moins un organohydrogénopolysiloxane, qui présente en moyenne au moins deux atomes d'hydrogène liés par silicium par molécule de polymère et qui est exempt de doubles liaisons oléfiniques.

6. Bande autoadhésive selon la revendication 5, **caractérisée en ce que** les deux R¹ représentent des groupes alcényle choisis indépendamment l'un de l'autre comprenant 1 à 14 atomes de C, en particulier des groupes vinyle ou des groupes hexényle.

7. Bande autoadhésive selon l'une quelconque des revendications 5 ou 6, **caractérisée en ce que** la double liaison du groupe alcényle est en position terminale, c'est-à-dire entre l'atome de C le plus éloigné et le deuxième atome de C le plus éloigné du groupe alcényle, partant de l'atome de Si sur lequel se trouve le groupe alcényle.

8. Bande autoadhésive selon l'une quelconque des revendications 5 à 7, **caractérisée en ce que** la valeur moyenne pour n est choisie de manière telle que le poids moléculaire pondéral moyen M_{w} du polydiorganosiloxane (I) se situe dans la plage de 7 x 10⁵ g/mole ≤ M_{w} ≤ 8 x 10⁵ g/mole.

9. Bande adhésive selon l'une quelconque des revendications 5 à 8, **caractérisée en ce que** la polydispersité D du polydiorganosiloxane (I) se situe dans la plage de 2,0 ≤ D ≤ 2,2.

10. Bande autoadhésive pour le remplacement volant de rouleaux de matériaux en bande plate, comprenant au moins un support dissociable et deux couches de masse adhésive, **caractérisée en ce qu'**au moins une des masses adhésives est une masse autoadhésive à base de silicium, comprenant
a) au moins un polydiorganosiloxane de formule générale 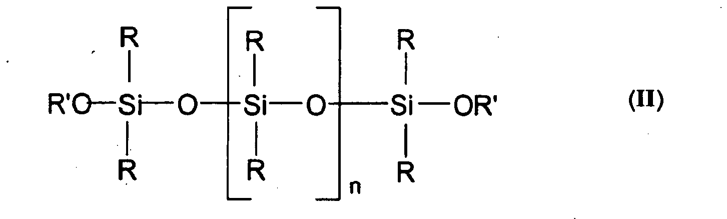 dans laquelle
- les deux R' sont choisis indépendamment l'un de l'autre dans le groupe comprenant l'hydrogène ainsi que les radicaux alkyle non ramifiés et ramifiés comprenant 1 à 6 atomes de carbone et/ou les radicaux alkylsilyle et/ou les radicaux alkyloxysilyle,
- les 2n+4 substituants R représentent, indépendamment les uns des autres, des radicaux hydrocarbonés monovalents et
- n vaut un nombre entier,
b) au moins une résine constituée par des unités (R²)₃SiO_{1/2} ("unités M") et des unités SiO_{4/2} ("unités Q") ("résine MQ"),
- les substituants R² des unités M représentant, indépendamment les uns des autres, des groupes alkyle, des groupes alcényle, des groupes alkylsilyle, des groupes hydroxy ou hydrogène.

11. Bande autoadhésive selon la revendication 10, **caractérisée en ce que** les deux substituants R' sont des atomes d'hydrogène.

12. Bande autoadhésive selon l'une quelconque des revendications 10 ou 11, **caractérisée en ce que** la valeur moyenne pour n est choisie de manière telle que le poids moléculaire pondéral moyen M_{w} du polydiorganosiloxane (II) se situe dans la plage de 6,4 x 10⁵ g/mole ≤ M_{w} ≤ 1,0 x 10⁶ g/mole.

13. Bande adhésive selon l'une quelconque des revendications 10 à 12, **caractérisée en ce que** la polydispersité D du polydiorganosiloxane (II) se situe dans la plage de 2,3 ≤ D ≤ 2,8.

14. Bande autoadhésive selon l'une quelconque des revendications précédentes, **caractérisée en ce que** les substituants R sont choisis, indépendamment les uns des autres, dans le groupe des radicaux hydrocarbonés comprenant 1 à 18 atomes de carbone.

15. Bande autoadhésive selon l'une quelconque des revendications précédentes, **caractérisée en ce que** les substituants R sont choisis, indépendamment les uns des autres, dans le groupe suivant, formé par les groupes méthyle, les groupes phényle non substitués et les groupes phényle substitués.

16. Bande autoadhésive selon l'une quelconque des revendications précédentes, **caractérisée en ce que** la résine MQ est une résine présentant un poids moléculaire pondéral moyen M_{w} de 500 g/mole ≤ M_{w} ≤ 100 000 g/mole.

17. Procédé pour la préparation de la bande autoadhésive selon l'une quelconque des revendications précédentes, **caractérisé en ce que** la masse autoadhésive à base de silicium est revêtue sur au moins une face d'un matériau support et est réticulée sur ce matériau support par des rayons électroniques.

18. Procédé selon la revendication 17, **caractérisé en ce qu'**on réticule avec une dose de rayonnement électronique d'au moins 10 kGy, préférablement d'au moins 15 kGy, avantageusement d'au moins 20 kGy, de manière tout particulièrement préférée d'au moins 25 kGy.

19. Procédé selon la revendication 18, **caractérisé en ce que** la réticulation est réalisée jusqu'à un degré de réticulation qui correspond à une proportion élastique d'au moins 50%, préférablement d'au moins 60%, plus préférablement d'au moins 75%, de manière particulièrement préférée d'au moins 90%, pouvant être déterminée dans le test de déplacement sous l'effet d'un microcisaillement (Test C).
